# FASCICULE DE BREVET EUROPEEN

(11) **EP 4 057 168 B1**
(45) Date de publication et mention de la délivrance du brevet: **28.06.2023**
(21) Numéro de dépôt: 22157119.3
(22) Date de dépôt: 16.02.2022
(51) Int. Cl.: G06F 21/54, G06F 21/72

(54) **PROCÉDÉ D EXÉCUTION D'UN PROGRAMME D ORDINATEUR PAR UN APPAREIL ÉLECTRONIQUE**
VERFAHREN ZUR AUSFÜHRUNG EINES COMPUTERPROGRAMMS DURCH EIN ELEKTRONISCHES GERÄT
METHOD FOR EXECUTING A COMPUTER PROGRAM BY AN ELECTRONIC APPARATUS

(30) Priorité: 09.03.2021 FR 2102263
(43) Date de publication de la demande: 14.09.2022
(73) Titulaire: Commissariat à l'énergie atomique et aux énergies alternatives, 75015 Paris (FR)
(72) Inventeur: SAVRY, Olivier, 38054 GRENOBLE Cedex 09 (FR); HISCOCK, Thomas, 38054 GRENOBLE Cedex 09 (FR)
(74) Mandataire: INNOV-GROUP

(56) Documents cités:
- EP-A1- 3 761 199
- US-A1- 2019 087 566
- CLERCQ RUAN DE ET AL: "SOFIA: Software and control flow integrity architecture", 2016 DESIGN, AUTOMATION & TEST IN EUROPE CONFERENCE & EXHIBITION (DATE), EDAA, 14 mars 2016 (2016-03-14), pages 1172-1177, XP032895110,

## Description

L'invention concerne un procédé d'exécution d'un programme d'ordinateur par un appareil électronique comportant un microprocesseur, une mémoire déchiffrée, une mémoire chiffrée et un module matériel de sécurisation.

L'invention concerne également :
- un programme d'ordinateur apte à être exécuté par un microprocesseur en mettant en oeuvre ce procédé, et
- un module matériel de sécurisation pour la mise en oeuvre de ce procédé.

Pour des raisons de sécurité, il est connu d'enregistrer les données traitées, lors de l'exécution d'un programme d'ordinateur, sous forme chiffrée dans une mémoire. Par la suite, la mémoire ou partie de mémoire qui contient ces données chiffrées est appelée « mémoire chiffrée ». Dans ce cas, à chaque fois qu'une donnée doit être chargée dans le microprocesseur pour y être traitée, la donnée chiffrée est d'abord transférée de la mémoire chiffrée vers une mémoire déchiffrée. Par la suite, on appelle « mémoire déchiffrée », une mémoire dans laquelle les données sont enregistrées sous forme déchiffrée. Lors de ce transfert, l'intégrité de la donnée à charger est d'abord vérifiée. Seulement si l'intégrité de la donnée est confirmée, alors la donnée est déchiffrée puis enregistrée dans la mémoire déchiffrée.

Dans ce contexte, des données sont également transférées, en sens inverse, de la mémoire déchiffrée vers la mémoire chiffrée pour y être enregistrées. Lors de ce transfert, la donnée est chiffrée, puis le code d'authentification permettant de vérifier son intégrité est calculé. Enfin, la donnée chiffrée et son code d'authentification sont enregistrés dans la mémoire chiffrée.

Les opérations de vérification de l'intégrité d'une donnée et de déchiffrement de cette donnée sont relativement longues. De même, les opérations de chiffrement et de calcul d'un code d'authentification sont aussi relativement longues. Ainsi, pour accélérer les transferts de données entre la mémoire déchiffrée et la mémoire chiffrée, il a déjà été proposé de faire ces transferts par bloc de plusieurs données, plutôt qu'individuellement pour chaque donnée. Dans ce cas, le bloc de données est enregistré dans la mémoire chiffrée sous la forme d'un bloc de données chiffrées et authentifiées.

Un tel bloc de données chiffrées et authentifiées comprend notamment :
- un cryptogramme du bloc de données en clair, et
- un code d'authentification de ce cryptogramme.

Le cryptogramme du bloc de données en clair est obtenu en traitant le bloc de données comme un seul bloc de bits et sans distinguer les données les unes des autres. Ainsi, pour obtenir ce cryptogramme, une seule opération de chiffrement est exécutée au lieu d'une opération de chiffrement pour chaque donnée de ce bloc de données. Ceci accélère l'opération de chiffrement des données. En contrepartie, le cryptogramme ne peut être déchiffré qu'en une seule opération de déchiffrement. En particulier, il n'est pas possible de déchiffrer qu'une partie seulement des données sans déchiffrer la totalité du cryptogramme.

De façon similaire, le code d'authentification est commun à l'ensemble des données du bloc de données. Il est donc calculé en une seule opération et en traitant le bloc de données comme un seul bloc. Ainsi, on évite de construire un code d'authentification pour chaque donnée de ce bloc de données. Cela accélère aussi la construction du code d'authentification.

Par ailleurs, pour obtenir des informations sur un programme d'ordinateur ou provoquer un fonctionnement inattendu de ce programme d'ordinateur, de nombreuses attaques sont possibles. Certaines de ces attaques sont basées sur un usage erroné d'un pointeur de donnée. On rappelle ici qu'un pointeur de donnée est une donnée qui contient l'adresse de la donnée à traiter et non pas directement la valeur de la donnée traitée.

L'usage de tels pointeurs de données est fréquent dans un programme d'ordinateur. Par exemple, un tel pointeur est utilisé pour pointer vers la première cellule d'un tableau de plusieurs cellules. Ensuite, pour traiter la cellule suivante de ce tableau, il suffit simplement d'incrémenter l'adresse contenue dans le pointeur d'un pas prédéterminé.

Lors de la conception du programme d'ordinateur, le pointeur est prévu pour manipuler et traiter un groupe de données d'une taille prédéterminée. Toutefois, lors de l'exécution du programme d'ordinateur, il est parfois possible de s'arranger pour que ce pointeur pointe sur une donnée située en dehors de ce groupe de données. Par exemple, un tel usage erroné de ce pointeur est provoqué en saisissant, dans un champ de saisie, une donnée dont la taille est bien plus grande que celle prévue initialement par les développeurs du programme d'ordinateur. Grâce à cela, il est possible d'écrire des données dans des plages d'adresses où cela ne devrait pas être fait. Autrement dit, le pointeur est utilisé pour pointer vers des adresses invalides. Un exemple de ce premier type d'attaque est connu sous le terme de « attaque par dépassement de tampon» ou « stack overflow attack », lorsque cette attaque vise la pile utilisée par une fonction du programme d'ordinateur. Lorsque le pointeur est utilisé pour écrire des données avant la plage d'adresses prévue à cet effet dans la pile, l'attaque est également connue sous le terme de « stack underflow attack ».

Ce premier type d'attaque peut être mis en oeuvre de façon assez similaire pour écrire des données à des adresses invalides dans d'autres parties de la mémoire que la pile, comme par exemple, dans une partie connue sous le terme de « tas » (« heap » en anglais).

Ces premiers types d'attaques ont en commun d'utiliser un pointeur valide pour pointer sur des adresses invalides. On dit alors qu'elles concernent ce qui touche au domaine de la « sécurité spatiale » (« spatial safety » en anglais).

Il existe aussi des usages erronés des pointeurs qui touchent au domaine de la sécurité temporelle (« temporal safety » en anglais). Dans ce cas, un pointeur invalide est utilisé pour pointer sur une adresse valide. Un pointeur invalide est un pointeur qui a été utilisé de façon valide pour traiter des données dans un contexte limité, et qui est ensuite utilisé à nouveau en dehors de ce contexte limité. Cela peut se produire si, par exemple, ce pointeur n'a pas correctement été réinitialisé ou initialisé. Ce type de pointeur invalide est connu sous le terme anglais de « dangling pointer ».

Certaines attaques repèrent donc ces pointeurs invalides, puis les utilisent pour lire ou écrire des données à des instants où ils ne devraient pas être utilisés pour cela. À titre d'illustration de ce second type d'attaque, on peut citer l'attaque connue sous l'expression anglaise de « use-after-free ».

On notera aussi que les attaques basées sur des usages erronés de pointeurs ne concernent pas que les pointeurs de données, c'est-à-dire, les pointeurs qui pointent vers une donnée à traiter par le microprocesseur. Ce type d'attaque concerne également les pointeurs appelés ici « pointeurs de fonctions », c'est-à-dire, un pointeur qui contient l'adresse non pas d'une donnée, mais d'une instruction à exécuter par le microprocesseur.

Plusieurs solutions ont déjà été proposées pour rendre plus difficile un usage erroné d'un pointeur. Par exemple, une solution est décrite dans la demande US2021-0004456. Cette solution est intéressante mais n'est pas applicable dans un contexte où les données sont chiffrées et déchiffrées par bloc. En effet, comme expliqué ci-dessus les avantages du chiffrement/déchiffrement par bloc découlent du fait, notamment, qu'il n'y a qu'un seul code d'authentification commun à toutes les données du bloc. A l'inverse, le procédé décrit dans la demande US2021-0004456 impose d'utiliser un code d'authentification pour chaque donnée accédée avec un pointeur. Cette dernière condition est donc incompatible avec un chiffrement/déchiffrement pas bloc des données.

De l'état de la technique est également connu de EP3761199A1, US2019/087566A1 et de l'article : Clercq Ruan De et AL : "SOFIA : Software and control flow integrity architecture", 2016 Design, Automation & Test In Europe Conférence, 14/03/2016, pages 1172-1177.

L'invention vise donc à proposer un procédé d'exécution d'un programme d'ordinateur, robuste vis-à-vis d'un large spectre d'attaques basées sur un usage erroné d'un pointeur tout en étant compatible avec un chiffrement/déchiffrement par bloc des données.

L'invention a donc pour objet un tel procédé d'exécution d'un programme d'ordinateur par un appareil électronique conforme à la revendication 1.

L'invention a également pour objet un programme d'ordinateur apte à être exécuté par un microprocesseur en mettant en oeuvre le procédé ci-dessus.

L'invention a également pour objet un module matériel de sécurisation pour la mise en oeuvre du procédé d'exécution ci-dessus.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code binaire d'un programme d'ordinateur,
- la figure 2 est une illustration schématique d'une partie d'une mémoire principale de l'appareil de la figure 1,
- la figure 3 est une illustration schématique de la structure d'un bloc de données chiffrées et authentifiées contenu dans la partie de la mémoire de la figure 2,
- la figure 4 est une illustration schématique de la structure d'un pointeur enrichi utilisé lors de l'exécution du code binaire par l'appareil de la figure 1,
- la figure 5 est un organigramme d'un procédé d'exécution du code binaire par l'appareil de la figure 1,
- la figure 6 est un organigramme d'un procédé détaillant les opérations réalisées lorsque l'instruction exécutée du code binaire est une instruction de chargement ou d'écriture d'une donnée,
- la figure 7 est une illustration schématique d'un compilateur apte à générer le code binaire exécuté par l'appareil de la figure 1.

Les conventions, notations et définitions utilisées dans cette description sont données dans le chapitre I. Ensuite, un exemple détaillé de mode de réalisation est décrit dans le chapitre II à l'aide des figures. Dans un chapitre III suivant, des variantes de ce mode de réalisation détaillé sont présentées. Enfin, les avantages des différents modes de réalisation sont présentés dans un chapitre IV.

### Chapitre I : Conventions, notations et définitions :

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique. Le code source n'est pas directement exécutable par un microprocesseur. Le code source est destiné à être transformé par un compilateur en un code binaire directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Le jeu d'instructions machines d'un microprocesseur est formé par l'ensemble des opcodes utilisables pour former des instructions exécutables par le microprocesseur. Le jeu d'instructions machines peut être différent d'un microprocesseur à un autre.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Pour être exécuté par un microprocesseur, le code binaire est enregistré dans des lignes d'une mémoire principale. Typiquement, le code binaire comporte plusieurs centaines ou milliers de lignes. Ici, chacune de ces lignes est appelée "ligne de code". Chaque ligne de code est enregistrées à une adresse qui lui est propre dans la mémoire principale. Chaque ligne de code contient une seule instruction ou une seule donnée. Par la suite, lorsque le code contenu dans la ligne de code correspond à une instruction, cette ligne de code est simplement appelée "instruction". Lorsque le code contenu dans la ligne de code correspond une donnée, la ligne de code est simplement appelée "donnée". Le terme "ligne de code" est utilisé pour désigner aussi bien une donnée qu'une instruction.

Au niveau du code binaire, une instruction et une donnée correspondent tous les deux à des bits. Toutefois, les instructions et les données ne sont pas traitées de la même façon par un microprocesseur. Par exemple, une instruction est seulement chargée puis exécutée par le microprocesseur lorsque le compteur ordinal pointe sur cette instruction. Une donnée est chargée par le microprocesseur seulement en réponse à l'exécution par ce microprocesseur d'une instruction de chargement de cette donnée.

On parle d'exécution d'une fonction pour désigner l'exécution des instructions réalisant cette fonction.

### Chapitre Il : Exemple de mode de réalisation détaillé :

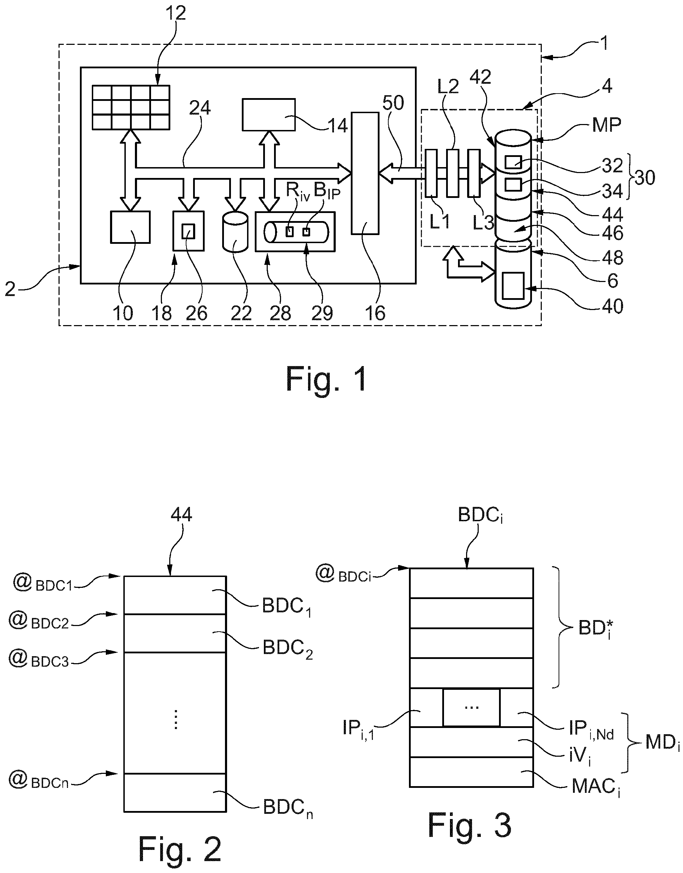

La figure 1 représente un appareil électronique 1 comportant un microprocesseur 2, un ensemble 4 de mémoires et un support 6 de stockage de masse. Par exemple, l'appareil 1 est un ordinateur, un smartphone, une tablette électronique ou similaire.

Le microprocesseur 2 comporte ici :
- une unité arithmétique et logique 10 ;
- un ensemble 12 de registres ;
- un tampon 14 de données ;
- une interface 16 d'entrée/sortie de lignes de code,
- un chargeur 18 d'instructions comportant un compteur ordinal 26,
- une file 22 d'instructions à exécuter, et
- un module matériel 28 de sécurisation comportant une mémoire non-volatile sécurisée 29.

L'ensemble 4 est configuré pour stocker les lignes de code d'un code binaire 30 d'un programme devant être exécuté par le microprocesseur 2. L'ensemble 4 est une mémoire à accès aléatoire. Typiquement, l'ensemble 4 est une mémoire volatile. Chaque ligne de code est associée à une adresse physique qui est utilisée pour la charger ou l'écrire sans modifier les autres lignes de code. Ainsi, par la suite, on dit que ces lignes de code sont adressables individuellement. A titre d'illustration, dans ce mode de réalisation, les lignes de code sont chacune codées sur 64 bits et sont donc chacune formée par huit octets. Par la suite, la taille d'une ligne de code, en nombre d'octets, est notée T_{d}.

Ici, chaque ligne de code est aussi associée à une adresse virtuelle dans l'espace d'adressage du programme d'ordinateur. Il existe une relation bijective qui relie chaque adresse virtuelle d'une ligne de code à l'adresse physique de cette même ligne de code. La conversion d'une adresse virtuelle en adresse physique est typiquement réalisée par une unité de management de mémoire connue sous l'acronyme MMU ("Management Memory Unit").

Par exemple, l'ensemble 4 comporte :
- trois niveaux de mémoires caches, et
- une mémoire principale MP.

Les mémoires caches permettent d'accélérer le transfert de données entre la mémoire principale MP et le microprocesseur 2. Les trois niveaux de mémoire cache sont appelés habituellement L1, L2 et L3. Sur la figure 1, les symboles "L1", "L2" et "L3" sont utilisés pour désigner, respectivement, les trois mémoires caches L1, L2 et L3. Ici, pour simplifier la figure 1, la mémoire cache L1 est représentée à l'extérieur du microprocesseur 2 alors que, souvent, elle est intégrée à l'intérieur du microprocesseur 2. Les mémoires L1 à L3 sont classées par ordre de rapidité de lecture, la mémoire L1 étant la plus rapide. Généralement, la taille des mémoires cache est inversement proportionnelle à leur rapidité.

Classiquement, après le chargement du code binaire 30 dans la mémoire MP, la mémoire MP comporte notamment les parties suivantes :
- une première partie 42 contenant les instructions à exécuter,
- une deuxième partie 44 contenant des données à traiter,
- une troisième partie 46 utilisée pour sauvegarder le contexte d'exécution d'une fonction lorsqu'elle appelle une autre fonction, et
- une quatrième partie 48 utilisée pour allouer dynamiquement de la mémoire au programme en cours d'exécution afin d'y enregistrer des données.

La partie 42 est connue sous le terme de "segment de code" ("code segment" ou "text segment" en anglais).

La partie 44 contient typiquement les variables statiques et globales du programme exécuté. La partie 44 est elle-même classiquement divisée en une première et une seconde sections. La première section contient les variables statiques est globales qui ont été initialisées lors de la compilation. Cette première section est connue sous le terme de segment de données et souvent notée ".data". La seconde section comporte les variables statiques et globales qui n'ont pas été initialisées lors de la compilation du code binaire 30. Cette seconde section est également connue sous le terme de "segment bss" et souvent notée ".bss". Généralement, ces deux sections sont contiguës.

La partie 46 est connue sous le terme de "pile d'exécution" ("call stack" en anglais). Par conséquent, par la suite, la partie 46 est également appelée "pile 46". Enfin la partie 48 est connue sous le terme de "tas" ("heap" en anglais). Ainsi, par la suite, la partie 48 est également appelée "tas 48".

Le code binaire 30 comporte notamment un code machine 32 et un bloc 34 de données nécessaires à l'exécution du code binaire 30. Le code machine 32 et le bloc 34 sont enregistrés dans, respectivement, les parties 42 et 44.

L'exécution du code binaire 30 débute par le chargement et le traitement de données du bloc 34. Ici, en particulier, le bloc 34 comporte un cryptogramme ka* obtenu en chiffrant une clé secrète ka à l'aide d'une clé publique pk_{CPU} du microprocesseur 2.

L'ensemble 4 de mémoire est raccordé au microprocesseur 2 par un bus de données et un bus d'adresses. Pour simplifier la figure 1, ces deux bus sont représentés par une double flèche 50 et désignés collectivement dans la suite de cette description par le terme "bus 50".

La taille du bus d'adresses détermine la taille N_{@}, en nombre de bits, des adresses utilisées pour accéder à la mémoire 4. Typiquement, la taille N_{@} est supérieure ou égale à 8, 16, 32 ou 64 bits. Par exemple, dans ce mode de réalisation, la taille N_{@} est égale à 64 bits.

L'ensemble 4 est un ensemble de mémoires chiffrées, c'est-à-dire un ensemble dans lequel les lignes de code sont enregistrées sous forme chiffrée. Par la suite, la description est faite dans le cas particulier où les lignes de code chiffrées sont des données contenues dans la partie 44.

Un découpage en blocs de données chiffrées et authentifiées de la partie 44 est représenté sur la figure 2. Dans cette figure et dans la suite de la description, on note "BDCᵢ" un bloc de données chiffrées et authentifiées, enregistré dans la mémoire MP à l'adresse @_{BDCi}, où l'indice i est un identifiant de ce bloc BDCᵢ. Ici, l'indice i est le numéro d'ordre du bloc de données compté à partir du premier bloc BDC₁, c'est-à-dire celui situé au début de la partie 44. L'adresse @_{BDCi} est ici égale à l'adresse à laquelle débute le bloc BDCᵢ. Dans cet exemple, l'indice i varie de 1 à n de sorte que la partie 44 est divisée en n blocs BDCᵢ distincts. Sur la figure 2 et les suivantes, le symbole "..." indique qu'une partie des éléments n'a pas été représentée.

Ici, tous les blocs BDCᵢ sont structurellement identiques. Ainsi, seul le bloc BDCᵢ représenté sur la figure 3 est décrit en détail. La taille du bloc BDCᵢ en nombre d'octets est noté T_{b} par la suite. La taille T_{b} est supérieure à huit ou seize et, généralement supérieur ou égale à 32 ou 64 octets. Généralement, la taille T_{b} est inférieure à 1 ko ou 1 Mo. Dans ce premier mode de réalisation, à titre d'illustration la taille T_{b} est égal à 128 octets.

Le bloc BDCᵢ comporte, dans l'ordre en partant de son adresse @_{BDCi} de début :
- un cryptogramme BDᵢ*,
- des métadonnées MDᵢ, et
- un code d'authentification MACᵢ,

Le cryptogramme BDᵢ* est obtenu en chiffrant un bloc BDᵢ de N_{d} données D_{i,j} en clair à l'aide de la clé cryptographique ka, où N_{d} est un nombre entier supérieur à un ou deux ou quatre. Ici, le nombre N_{d} est égal à huit. L'indice j est un identifiant de la donnée D_{i,j} qui permet de la distinguer des autres données contenues dans le même bloc BDᵢ. Ici, l'indice j est le numéro d'ordre de la donnée D_{i,j} compté à partir de la première donnée D_{i,1} du bloc BDᵢ, c'est-à-dire à partir de la donnée D_{i,1} situé à l'adresse @_{BDi} à laquelle débute le bloc BDᵢ.

Plus précisément, le cryptogramme BDᵢ* est obtenu à l'aide de la relation suivante : BDᵢ* = fₖₐ(BDᵢ ; ivᵢ), où :
- fₖₐ est une fonction de chiffrement, correspondant à une fonction de déchiffrement fₖₐ⁻¹, et
- ivᵢ est un vecteur d'initialisation également connu sous le nom de "nonce".

Les fonctions fₖₐ et fₖₐ⁻¹ sont préprogrammées dans le module 28. Typiquement, la fonction fₖₐ est une fonction de chiffrement symétrique. Par exemple, la fonction fₖₐ est une fonction de chiffrement par flux, plus connue sous le terme anglais de "stream cipher", initialisée avec le vecteur ivᵢ.

Le vecteur ivᵢ est un vecteur d'initialisation dont la valeur est modifiée à chaque fois que la fonction fₖₐ est utilisée pour chiffrer un bloc BDᵢ de données en clair. A l'inverse, la clé ka est toujours la même. Dès lors, la clé ka permettant de déchiffrer le cryptogramme BDᵢ* est préenregistrée dans la mémoire 29 afin de permettre au module 28 de déchiffrer chaque cryptogramme BDᵢ*.

Dans ce mode de réalisation, chaque bloc BDᵢ contient N_{d} données D_{i,j} associées à des adresses virtuelles respectives et consécutives. Par la suite, l'adresse virtuelle d'une donnée D_{i,j} est notée @_{Di,j}. Chaque bloc BDᵢ correspond donc à une plage continue de N_{d} adresses virtuelles consécutives. Ces plages d'adresses virtuelles sont distinctes les unes des autres. En particulier, elles ne se chevauchent pas de sorte qu'une même donnée D_{i,j} ne peut pas être contenue dans plusieurs blocs BDᵢ différents. De plus, ces plages d'adresses sont contiguës les unes aux autres de sorte qu'il n'existe pas, entre un premier bloc BDᵢ et un second bloc BDᵢ₊ᵢ contigus, des données qui n'appartiennent ni au bloc BDᵢ ni au bloc BDᵢ₊₁. Ainsi, les blocs BDᵢ forment, dans l'espace d'adressage du programme d'ordinateur, une succession de blocs de données consécutifs. A l'intérieur d'un même bloc BDᵢ, les N_{d} données D_{i,j} sont, par exemple, classées par ordre d'adresses croissantes de sorte que la donnée D_{i,1} est la première donnée du bloc BDᵢ. Dans ces conditions, l'adresse @_{BDi} de début du bloc BDᵢ est égale à l'adresse @_{Di,1} de la donnée D_{i,1}.

La taille T_{BD} du bloc BDᵢ est égale à N_{d}T_{d}, où T_{d} est la taille d'une donnée D_{i,j} en nombre d'octets. Ici, la taille du cryptogramme BD * est égale à la taille du bloc BDᵢ.

Les métadonnées MDᵢ contiennent ici:
- pour chaque donnée D_{i,j}, un emplacement réservé pour y enregistrer les bits d'un identifiant de pointeur IP_{i,j} associé spécifiquement à cette donnée D_{i,j}, et
- le vecteur ivᵢ utilisé pour obtenir le cryptogramme BDᵢ*.

Dans les métadonnées MDᵢ, il y a autant d'emplacements réservés pour y enregistrer un identifiant de pointeur qu'il y a de données D_{i,j} dans le bloc BDᵢ. Sur la figure 3, chacun de ces emplacements est désignés par la référence "IP_{i,j}" de l'identifiant IP_{i,j} qu'il est destiné à contenir. Ici, la taille de chaque identifiant IP_{i,j}, et donc la taille de chaque emplacement réservé, est égale à 8 bits.

L'identifiant IP_{i,j} est un identifiant qui permet d'identifier de façon unique un pointeur PD_{i,j} parmi un ensemble d'autres pointeurs utilisés lors de la même exécution du code binaire 30. Le pointeur PD_{i,j} est un pointeur qui contient l'adresse de la donnée D_{i,j} et qui permet d'accéder à cette donnée.

L'identifiant IP_{i,j} est construit de manière à limiter la probabilité que deux pointeurs différents aient le même identifiant de pointeur. Par exemple, les identifiants de pointeurs sont construits pour que cette probabilité soit inférieure à une chance sur dix et, de préférence, une chance sur cinquante ou une chance sur cent ou une chance sur mille.

L'identifiant IP_{i,j} peut être généré soit lors de la compilation du code source pour obtenir le code binaire 30 soit dynamiquement lors de l'exécution du code binaire 30.

Par exemple, lorsque le pointeur PD_{i,j} est déclaré dans le code source, l'identifiant IP_{i,j} est généré lors de la compilation. Dans ce cas, classiquement, un tel pointeur pointe sur un variable globale ou une variable statique ou une variable locale. Lors de la compilation du code source, pour minimiser la probabilité que deux pointeurs différents aient le même identifiant de pointeur, par exemple, le compilateur génère l'identifiant IP_{i,j} du pointeur par tirage aléatoire ou pseudo-aléatoire de cet identifiant dans un ensemble EIP. L'ensemble EIP contient toutes les valeurs possibles pour un identifiant de pointeur sauf les valeurs déjà attribuées à un identifiant de pointeur. Dans un autre mode de réalisation, l'identifiant IP_{i,j} est à chaque fois tirée de façon aléatoire ou pseudo-aléatoire dans l'ensemble EIP. A titre d'illustration, pour faire cela, dans le cas d'un compilateur utilisant LLVM ("Low Level Virtual Machine"), l'instruction "Alloca" est modifiée pour générer en même temps le pointeur PD_{i,j} et l'identifiant IP_{i,j} de ce pointeur. L'instruction "Alloca" génère un pointeur qui pointe typiquement sur une variable locale enregistrée dans la pile 46.

Lorsque le code binaire comporte des instructions qui, lorsqu'elles sont exécutées par le microprocesseur 2, alloue dynamiquement une zone de mémoire libre pour y enregistrer des données, alors le pointeur PD_{i,j} et son identifiant IP_{i,j} sont générés lors de l'exécution du code binaire 30. Plus précisément, lorsque de telles instructions sont exécutées, elles génèrent un pointeur qui pointe vers la zone de mémoire allouée dynamiquement. De telles instructions sont fréquemment utilisées pour allouer une zone de mémoire dans le tas 48. Par exemple, dans un code source utilisant les librairies standards du langage C, de telles instructions correspondent aux fonctions "malloc()", "calloc()", "realloc()", ...etc. Dans ce cas, ces fonctions "malloc()", "calloc()", "realloc()", ...etc sont modifiées pour générer l'identifiant IP_{i,j} en même temps qu'elle génère le pointeur PD_{i,j}. De préférence, chaque exécution d'une telle fonction doit générer un identifiant IP_{i,j} aussi différent que possible de l'identifiant IP_{i,j} généré lors de la précédente exécution de cette même fonction. Pour cela, par exemple, à chaque exécution d'une telle fonction :
- l'identifiant IP_{i,j} est tirée, de façon aléatoire ou pseudo-aléatoire, dans l'ensemble EIP, ou
- l'identifiant IP_{i,j} est pris égale à l'empreinte numérique obtenue en appliquant une fonction de hachage à l'adresse @_{Di,j} de la donnée D_{i,j} vers laquelle le pointeur PD_{i,j} pointe.

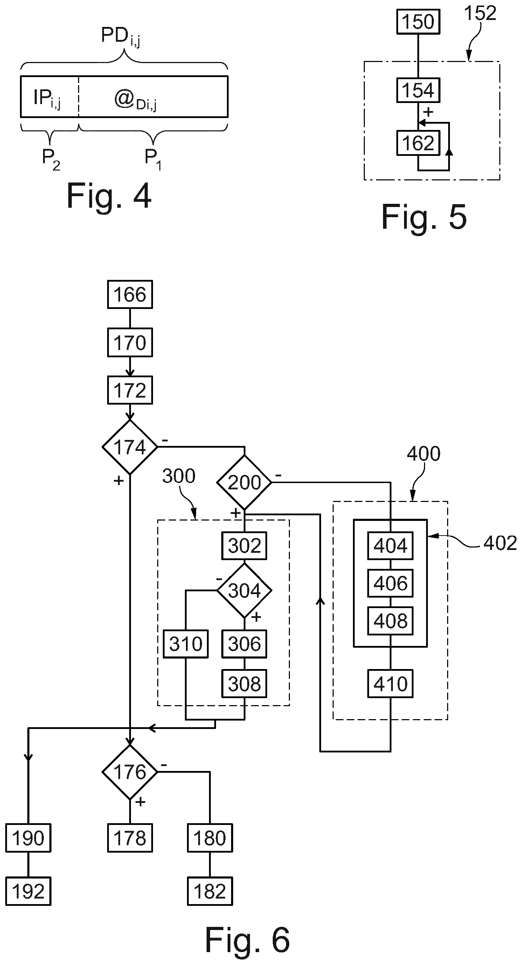

Le rôle de ces identifiant IP_{i,j} est détaillé plus loin en référence à la figure 6.

Le code MACᵢ est une étiquette d'intégrité qui permet de vérifier l'intégrité du bloc BDᵢ de données. A cet effet, ici, le code MACᵢ est un code permettant de vérifier l'intégrité et l'authenticité du cryptogramme BDᵢ*. De plus, dans ce mode de réalisation, le code MACᵢ permet aussi de vérifier l'intégrité et l'authenticité des métadonnées MDᵢ. Ce code MACᵢ est communément appelé « code d'authentification de message » et connu sous l'acronyme MAC (« Message Authentification Code »). Un tel code MACᵢ est obtenu en construisant une empreinte numérique à partir du cryptogramme BDᵢ* et des métadonnées MDᵢ. Cette empreinte numérique comporte normalement moins de bits que le cryptogramme BDᵢ*. Une telle empreinte numérique est plus connue sous le terme anglais de "digest" ou "hash". Cette empreinte numérique est construite à l'aide d'une fonction prédéterminée et d'une clé secrète k' connue seulement de l'auteur du code binaire 30 et du microprocesseur 2. Ici, la clé k' est préenregistrée dans la mémoire 29 du module 28 de sécurisation. Par exemple, la fonction prédéterminée est une fonction à sens unique telle qu'une fonction de hachage. Dans ce cas, généralement, l'empreinte numérique est le résultat de l'application de cette fonction de hachage à une combinaison, par exemple une concaténation, du cryptogramme BDᵢ* et des métadonnées MDᵢ. La taille du code MACᵢ est typiquement supérieure ou égale à 32 bits ou 64 bits. Ici, la taille du code MACᵢ est égale à seize octets.

Dans ce mode de réalisation, pour accélérer les transferts de données entre le microprocesseur 2 et l'ensemble 4 de mémoires, les tailles T_{b} et T_{BD} sont toutes les deux des puissances de deux. Pour cela la taille T_{b} est égale à deux fois la taille T_{BD}. Ainsi, dans cet exemple, T_{BD} est égale à 64 octets. Dans ces conditions, la taille des métadonnées MDᵢ est égale à quarante huit octets. Sur ces quarante huit octets, huit d'entre-eux sont utilisés pour stocker les identifiant IP_{i,j} et huit octets sont utilisés pour stocker le vecteur ivᵢ.

Enfin, l'adresse @_{BDCi} à laquelle débute le bloc BDCᵢ est définie par la relation (1) suivante : @_{BDCi} = @_{BDi}.T_{b}/T_{BD}. Le ratio @_{BDi}/T_{BD} est ici nécessairement un nombre entier puisque l'adresse @_{BDi} est égale au cumul des tailles des blocs BD₁ à BDᵢ₋₁. De plus, de préférence, la relation qui convertie chaque adresse @_{BDCi} en une adresse physique dans la mémoire MP est une relation linéaire. Ainsi, les blocs BDCᵢ sont classées dans la mémoire MP dans le même ordre que les blocs BDᵢ, c'est-à-dire par ordre croissant des adresses physiques des données données D_{i,j} qui sont chiffrées dans ce bloc BDCᵢ. De plus, la relation (1) impose que les blocs BDCᵢ sont, dans la mémoire MP, immédiatement consécutifs les uns aux autres et ne se chevauchent pas.

Dans cet exemple, le jeu d'instructions machines du microprocesseur 2 comporte notamment une instruction d'écriture et une instruction de chargement.

Une instruction d'écriture est une instruction qui, lorsqu'elle est exécutée par l'unité 10, provoque l'écriture d'une donnée dans l'ensemble 4.

Une instruction de chargement est une instruction qui, lorsqu'elle est exécutée par l'unité 10, provoque le chargement d'une donnée dans le microprocesseur 2 à partir de l'ensemble 4. Généralement, la donnée chargée est enregistrée dans un registre du microprocesseur comme, par exemple, un des registres de l'ensemble 12.

A titre d'illustration, le microprocesseur 2 est conforme à l'architecture RISC (« Reduced Instructions Set Computer ») et il met en oeuvre le jeu d'instructions "RISC-V".

Ici, l'unité 10 est une unité arithmétique et logique de Nᵢₙₛₜ bits. Typiquement, Nᵢₙₛₜ est un entier supérieure ou égale à 8, 16, 32 ou 64. Dans cet exemple, Nᵢₙₛₜ est égal à 32.

Le chargeur 18 charge dans la file 22 la prochaine instruction à exécuter par l'unité 10 à partir de l'ensemble 4 de mémoires. Plus précisément, le chargeur 18 charge l'instruction sur laquelle pointe le compteur ordinal 26.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le tampon 14 est utilisé pour accélérer encore plus les transferts de données entre le microprocesseur 2 et l'ensemble 4 de mémoire. Pour cela, les données transférées entre le microprocesseur 2 et l'ensemble 4 sont systématiquement transférées par bloc entier contenant exactement N_{d} données. Plus précisément, lors du chargement d'une donnée à partir de l'ensemble 4, c'est le bloc BDCᵢ qui contient cette donnée qui est transféré, dans sa totalité, au microprocesseur 2 par l'intermédiaire du bus 50. A l'inverse, lorsqu'une donnée doit être écrite dans l'ensemble 4 de mémoires, c'est un bloc BDCᵢ complet, qui contient cette donnée écrite, qui est transféré du microprocesseur 2 vers l'ensemble 4 par l'intermédiaire du bus 50.

Ici, le tampon 14 est une mémoire déchiffrée, c'est-à-dire une mémoire dans laquelle les données sont enregistrées en clair. Ce tampon 14 est apte à contenir au moins un bloc BDᵢ de données en clair. Dans ce mode de réalisation, à titre d'illustration, il est apte à contenir un seul bloc de données BDᵢ.

Le module 28 est capable d'exécuter automatiquement les différentes opérations décrites en détails en référence au procédé de la figure 6 pour sécuriser l'exécution du programme d'ordinateur. En particulier, il est apte à transformer un bloc BDCᵢ en un bloc BDᵢ de données en clair et vice versa. Le module 28 fonctionne indépendamment et sans utiliser l'unité 10. Ainsi, il est capable de traiter des blocs de données avant et/ou après que ceux-ci soient traités par l'unité 10. A cet effet, il comporte notamment la mémoire non-volatile sécurisée 29. Aucun accès à cette mémoire 29 sans passer par l'intermédiaire du module 28 n'est prévu. En particulier, l'unité 10 ne peut pas adresser cette mémoire 29. Dans ce mode de réalisation, le module 28 est pré-programmé, par exemple lors de sa conception, pour exécuter des opérations telles que les opérations suivantes :
- vérifier l'intégrité et l'authenticité d'un bloc BDCᵢ à partir du code MACᵢ qu'il contient,
- calculer un code MACᵢ,
- chiffrer le bloc BDᵢ pour obtenir le cryptogramme BDᵢ*,
- déchiffrer le cryptogramme BDᵢ* pour obtenir le bloc BDᵢ de données en clair.

La mémoire 29 est utilisée pour stocker les informations secrètes nécessaires à la mise en oeuvre du procédé de la figure 6. Ici, elle comporte donc notamment des informations secrètes pré-enregistrées avant le début de l'exécution du code binaire 30. En particulier, elle comporte les informations pré-enregistrées suivantes :
- une clé secrète k' utilisée pour le calcul et la vérification des codes MACᵢ,
- un clé privée secrète sk_{CPU} qui permet de déchiffrer les données qui ont été chiffrées à l'aide de la clé publique pk_{CPU}.

Dans ce mode de réalisation, la mémoire 29 comporte aussi :
- un registre Rᵢᵥ pour stocker un vecteur d'initialisation ivᵢ, et
- un registre B_{IP} pour stocker les identifiants de pointeur.

Dans cet exemple de réalisation, l'ensemble 12 comporte des registres généraux utilisables pour stocker tout type de données.

Un bus d'échange de données 24 relie les différents composants du microprocesseur 2 entre eux. Il est représenté sur la figure 1 pour indiquer que les différents composants du microprocesseur 2 peuvent échanger des données entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

La figure 4 représente la structure du pointeur PD_{i,j}. Ici, la taille du pointeur PD_{i,j} est égale à la taille N_{@} des adresses mémoires. Le pointeur PD_{i,j} comporte :
- une plage P₁ de bits contenant l'adresse @_{Di,j} vers laquelle le pointeur PD_{i,j} pointe, et
- une plage P₂ distincte de bits contenant l'identifiant IP_{i,j} du pointeur PD_{i,j}.

Les données D_{i,j} sont contenues dans une plage d'adresses de l'espace d'adressage du programme dont la taille est strictement inférieure à 2^{N@} afin de laisser suffisamment de place pour coder l'identifiant IP_{i,j} à l'intérieur du pointeur PD_{i,j}. Pour cela, la taille de la plage P₁ est inférieure à N_{@}-N_{P} bits, où N_{P} est la taille, en nombre de bits, de l'identifiant IP_{i,j.} De préférence, la taille N_{P} est supérieure à 4 bits ou 8 bits ou 16 bits et, généralement, inférieure à 32 bits ou 54 bits. Ici, la taille N_{P} est égale à 8 bits et les adresses @_{Di,j} sont donc codées sur moins de 56 bits. Dans ce mode de réalisation, la plage P₁ correspond aux N_{@}-N_{P} bits de poids faibles du pointeur PD_{i,j} et la plage P₂ correspond au N_{P} bits de poids forts du pointeur PD_{i,j}. Pour obtenir l'adresse @_{Di,j} de la donnée D_{i,j} à partir du pointeur PD_{i,j}, il suffit donc de masquer les bits de poids forts du pointeur PD_{i,j} utilisés pour enregistrer l'identifiant IP_{i,j}.

Un tel pointeur PD_{i,j} qui contient, en plus de l'adresse @_{Di,j}, d'autres informations, c'est-à-dire ici l'identifiant IP_{i,j}, est appelé "pointeur enrichi".

La figure 5 représente un procédé d'exécution du code binaire 30 par le microprocesseur 2.

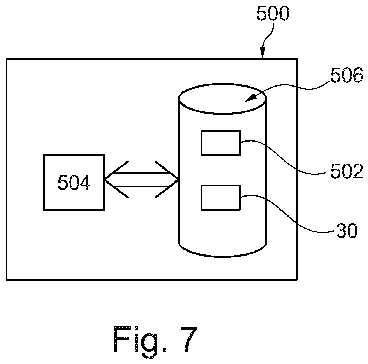

Le procédé débute par une étape 150 de génération puis de fourniture du code binaire 30 dans la mémoire MP. La génération du code binaire 30 est typiquement réalisée par un compilateur tel que celui décrit, plus loin, en référence à la figure 7.

Lors de la compilation du code source, à chaque fois que le compilateur construit un bloc BDCᵢ, pour chaque donnée D_{i,j} qui est chargée à l'aide d'un pointeur PD_{i,j}, il enregistre l'identifiant IP_{i,j} de ce pointeur dans les métadonnées MDᵢ. Pour les données D_{i,j} qui ne sont pas accédées à l'aide d'un pointeur, les bits situés à l'emplacement, dans les métadonnées MDᵢ, réservé pour y enregistrer l'identifiant de pointeur associé à cette donnée, sont initialisés à zéro. Autrement dit, l'identifiant de pointeur associé à une donnée qui n'ai pas accédée à l'aide d'un pointeur, est nul.

La fourniture du code binaire 30 consiste ensuite à enregistrer la copie 40 dans le support 6. Puis, par exemple, le microprocesseur 2 recopie la copie 40 à l'intérieur de la mémoire MP pour obtenir le code binaire 30 enregistré dans la mémoire MP. Ainsi, lors de l'étape 150, les bloc BDCᵢ construits lors de la compilation du code source et contenus dans le code binaire 30, sont enregistrés dans la mémoire MP et, généralement, dans la partie 44.

Ensuite, lors d'une phase 152, le microprocesseur 2 exécute le code binaire 30 et, en particulier, le code machine 32.

Au début de la phase 152, lors d'une étape 154, le module 28 charge notamment le cryptogramme ka* contenu dans le bloc 34 et le déchiffre à l'aide de la clé sk_{CPU} contenue dans la mémoire 29. À l'issue de l'étape 154, la clé ka est contenue dans la mémoire 29.

Ensuite, lors de l'étape 162, le microprocesseur 2 exécute, les unes après les autres, les instructions du code machine 32. Lors de cette étape 162, des instructions de chargement d'une donnée à l'aide d'un pointeur et des instructions d'écriture d'une donnée à l'aide d'un pointeur sont exécutées. Par la suite, ces deux types d'instructions sont collectivement désignées par l'expression "instruction d'accès" ou "instruction d'accès à la mémoire". A chaque fois qu'une instruction d'accès à la mémoire est exécutée par le microprocesseur 2, le procédé de la figure 6 est exécuté.

Le procédé de sécurisation des données enregistrées dans l'ensemble 4 va maintenant être décrit à l'aide de la figure 6 et dans le cas où la donnée accédée est une donnée D_{i,j} accédée à l'aide du pointeur PD_{i,j}.

Tout d'abord, lors d'une étape 166, le pointeur PD_{i,j} est obtenu. Typiquement, l'instruction d'accès à la donnée D_{i,j} exécutée par l'unité 10 comporte un opérande qui contient l'adresse à laquelle le pointeur PD_{i,j} est enregistré. Ainsi, l'exécution de cette instruction d'accès par l'unité 10 déclenche d'abord le chargement du pointeur PD_{i,j} dans un registre du microprocesseur 2.

Ensuite, lors d'une étape 170, le pointeur PD_{i,j} est transmis au module 28.

Lors d'une étape 172, le module 28 détermine l'adresse @_{BDCi} du bloc BDCᵢ qui contient cette donnée D_{i,j}. Pour cela, le module 28 calcule ici l'adresse @_{BDCi} selon la relation (2) suivante : @_{BDCi} = E(@_{Di,j}/T_{BD}).T_{b}, où :
- E(...) est la fonction qui retourne la partie entière du nombre entre parenthèses, et
- T_{BD} et T_{b} sont les tailles, en nombre d'octets, respectivement du bloc BDᵢ et du bloc BDCᵢ.

La fonction E(...) est connue sous le terme anglais de "floor".

Le terme E(@_{Di,j}/T_{BD}) donne le numéro d'ordre du bloc BDCᵢ à partir duquel la donnée D_{i,j} peut être chargée. Étant donné que dans ce mode de réalisation, les tailles T_{BD} et T_{b} sont toutes les deux des puissances de deux, la division par la taille T_{BD} et la multiplication par la taille T_{b} peuvent toutes les deux être réalisées par un registre à décalage. Un registre à décalage décale les bits du nombre qu'il contient vers la droite pour réaliser une division et vers la gauche pour réaliser une multiplication. Plus précisément, dans ce mode de réalisation, la taille T_{BD} est égale à 2⁶ octets et la taille T_{b} est égale à 2⁷ octets. Ici, le module 28 comporte donc un registre matériel à décalage. Dans ces conditions, le module 28 est capable de calculer très rapidement, et typiquement en un cycle d'horloge, l'adresse @_{BDCi}.

Ainsi, ici, pour calculer l'adresse @_{BDCi}, le module 28 enregistre l'adresse @_{Di,j} dans son registre à décalage puis décale de six bits vers la droite les bits de l'adresse enregistrée dans ce registre pour obtenir le résultat du ratio @_{Di,j}/T_{BD} Ensuite le module 28 calcule la partie entière du ratio obtenu puis enregistre cette partie entière dans le registre à décalage. Enfin, le registre à décalage décale de sept bits vers la gauche les bits de cette partie entière pour obtenir l'adresse @_{BDCi}.

Il est préférable que le calcul de l'adresse @_{BDCi} soit très rapide, car ce calcul est réalisé à chaque fois qu'une donnée est accédée.

Une fois l'adresse @_{BDCi} déterminée, lors d'une étape 174, le module 28 vérifie si l'adresse @_{BDCi} est égale à une adresse @_{BDCc}. L'adresse @_{BDCc} est l'adresse du bloc BDC_{c} à partir duquel le bloc BD_{c} actuellement contenu dans le tampon 14 a été obtenu. L'adresse @_{BDCc} est, par exemple, enregistrée dans la mémoire 29.

Dans l'affirmative, cela signifie que le bloc BDᵢ qui contient la donnée D_{i,j} à accéder est déjà enregistré dans le tampon 14. Autrement dit, les blocs BDᵢ et BD_{c} sont les mêmes. Dans ce cas, le procédé se poursuit :
- directement par une étape 176 si l'instruction d'accès exécutée est une instruction de chargement, ou
- directement par une étape 190 si l'instruction d'accès exécutée est une instruction d'écriture.

Lors de l'étape 176, pour la donnée D_{i,j} à charger, le module 28 relève le premier identifiant IP_{i,j} contenu dans les métadonnées MDᵢ du bloc BDCᵢ et associé à cette donnée D_{i,j}. Ici, comme expliqué plus loin, ce premier identifiant IP_{i,j} se trouve dans le registre B_{IP}. Le premier identifiant IP_{i,j} est donc extrait de ce registre B_{IP}. Le module 28 relève aussi le second identifiant IP_{i,j} contenu dans le pointeur PD_{i,j} transmis lors de l'étape 170. Pour cela, le module 28 extrait le second identifiant IP_{i,j} de la plage P₂ du pointeur PD_{i,j} reçu. Ensuite, le module 28 vérifie si les premier et second identifiants IP_{i,j} extraits correspondent. Ici, les premier et second identifiants IP_{i,j} correspondent uniquement s'ils sont égaux.

Si les premier et second identifiants IP_{i,j} correspondent, lors d'une étape 178, le traitement de la donnée D_{i,j} par le microprocesseur 2 est autorisé. Dans ce cas, la donnée D_{i,j} est alors directement chargé à partir du tampon 14 puis, par exemple, transférée dans l'un des registres de l'ensemble 12. Ensuite, l'unité 10 exécute des instructions de traitement de cette donnée D_{i,j} enregistrée dans un registre de l'ensemble 12.

Si les premier et second identifiants IP_{i,j} ne correspondent pas, c'est-à-dire qu'ils sont différents, dans ce cas, le procédé se poursuit par une étape 180. Lors de l'étape 180, le module 28 déclenche le signalement d'une faute d'exécution du code binaire 30. De plus, ici, lors de l'étape 180, le traitement, par le microprocesseur 2, de la donnée D_{i,j} est interdit. Par exemple, lors de l'étape 180, la donnée D_{i,j} n'est pas chargée dans un registre de l'ensemble 12.

Ensuite, lors d'une étape 182, en réponse à ce signalement d'une faute d'exécution, le microprocesseur 2 met en oeuvre une ou plusieurs mesures correctives et/ou une ou plusieurs contre-mesures.

De très nombreuses contre-mesures sont possibles. Les contre-mesures mises en oeuvre peuvent avoir des degrés de sévérité très différents. Par exemple, les contre-mesures mises en oeuvre peuvent aller d'un simple affichage ou une simple mémorisation d'un message d'erreur sans interrompre l'exécution normale du code binaire, jusqu'à une mise hors service définitive du microprocesseur 2. Le microprocesseur 2 est considéré comme étant hors service lorsqu'il est définitivement placé dans un état où il est incapable d'exécuter un quelconque code binaire. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code binaire et/ou sa réinitialisation, et
- la suppression du code binaire de la mémoire MP et/ou la suppression de la copie 40 de sauvegarde et/ou la suppression des données secrètes.

Lors de l'étape 190, la valeur à écrire dans la donnée D_{i,j} est directement écrite dans la donnée D_{i,j} du bloc de données BDᵢ actuellement enregistré dans le tampon 14.

Ensuite, lors d'une étape 192, le module 28 remplace, dans le registre B_{IP}, le précédent identifiant IP_{i,j} associé à la donnée D_{i,j} par l'identifiant IP_{i,j} du pointeur PD_{i,j} transmis lors de l'étape 170.

Ici, lors de l'écriture de la donnée D_{i,j} dans le tampon 14, le module 28 ne procède pas à la vérification de l'identifiant IP_{i,j} associé à cette donnée. Au contraire, à chaque fois qu'une donnée est écrite dans le tampon 14, le module 28 autorise l'utilisation du pointeur PD_{i,j} pour charger ultérieurement la donnée D_{i,j}.

De plus, lors de l'étape 192, le module 28 bascule un indicateur d'écriture vers son état actif. Ainsi, l'état actif de cet indicateur d'écriture indique que le bloc BD_{c} actuellement présent dans le tampon 14 a été écrit. A l'inverse, l'état inactif de cet indicateur d'écriture indique que le bloc BD_{c} actuellement enregistré dans le tampon 14 n'a pas été écrit. Un tel indicateur d'écriture est connu sous le terme anglais de « bit dirty».

Si lors de l'étape 174, l'adresse @_{BDCi} est différente de l'adresse contenue dans la mémoire 29, cela signifie que le bloc BD_{c} actuellement contenu dans le tampon 14 ne contient pas la donnée D_{i,j} à accéder. Dans ce cas, le procédé se poursuit par une étape 200.

Lors de l'étape 200, le module 28 vérifie si le bloc BD_{c} actuellement contenu dans le tampon 14 a été écrit. Typiquement, pour faire cela, le module 28 vérifie l'état de l'indicateur d'écriture.

Si l'indicateur d'écriture est dans son état inactif, il n'est pas nécessaire d'enregistrer le bloc BD_{c} dans l'ensemble 4. Dans ce cas, le procédé se poursuit directement par une étape 300 de transfert du bloc BDCᵢ qui contient la donnée D_{i,j} chiffrée depuis l'ensemble 4 vers le tampon 14.

Dans le cas contraire, le bloc BD_{c} actuellement enregistré dans le tampon 14 doit être sauvegardé dans l'ensemble 4. Dans ce cas, le procédé se poursuit par une étape 400 de transfert du bloc BD_{c} actuellement contenu dans le tampon 14 vers l'ensemble 4.

L'étape 300 débute par une opération 302 de chargement du bloc BDCᵢ situé à l'adresse @_{BDCi} déterminée lors de l'étape 172. Typiquement, lors de l'opération 302, l'adresse @_{BDCi} est convertie automatiquement en une adresse physique par l'unité MMU ("Management Memory Unit"). De préférence, le bloc BDCᵢ est chargé depuis l'ensemble 4 vers le microprocesseur en utilisant un mode de transfert accéléré de bloc de données sur le bus 50. Un tel mode est par exemple connu sous le terme anglais de « burst mode ».

Le bloc BDCᵢ chargé est alors temporairement stocké dans le microprocesseur 2. Par exemple, il est enregistré dans l'ensemble 12 ou dans la mémoire 29 ou dans le tampon 14.

Lors de l'opération 304, le module 28 vérifie l'intégrité du bloc BDCᵢ chargé. Ici, il vérifie l'intégrité et l'authenticité du cryptogramme BDᵢ* et des métadonnées MDᵢ à l'aide du code MACᵢ. Pour cela, le module 28 calcule un code MACᵢ' en utilisant le même algorithme que celui mis en oeuvre pour construire le code MACᵢ sauf qu'il utilise le cryptogramme BDᵢ* et les métadonnées MDᵢ chargés lors de l'opération 302. Si le code MACᵢ' ainsi construit est identique au code MACᵢ chargé, alors l'intégrité et l'authenticité du cryptogramme BDᵢ* et des métadonnées MDᵢ est confirmée.

Dans ce cas, le module 28 autorise le traitement des données D_{i,j} par le microprocesseur. A cet effet, ici, le module 28 procède, lors d'une opération 306, au déchiffrement du cryptogramme BDᵢ* en utilisant pour cela la clé ka enregistrée dans sa mémoire 29 et le vecteur ivᵢ extrait des métadonnées MDᵢ du bloc BDCᵢ chargé.

Après l'opération 306, lors d'une opération 308, le bloc BDᵢ en clair obtenu est enregistré dans le tampon 14 à la place du précédent bloc de données. A cette occasion, l'indicateur d'écriture est basculé dans son état inactif.

Lors de l'opération 308, le module 28 enregistre également les identifiants IP_{i,j} contenus dans les métadonnées MDᵢ du bloc BDCᵢ chargé dans le registre B_{IP} de la mémoire 29. Le vecteur ivᵢ contenu dans les métadonnées MDᵢ du bloc BDCᵢ chargé est lui aussi enregistré dans le registre Rᵢᵥ de la mémoire 29. Enfin, l'adresse @_{BDCi} du bloc BDCᵢ chargé est aussi enregistrée dans la mémoire 29. Cette adresse @_{BDCi} enregistrée devient la nouvelle adresse @_{BDCc}.

Dans le cas où la vérification de l'intégrité du bloc BDCᵢ échoue, le module 28 procède à une opération 310 d'inhibition du traitement des données de ce bloc. Par exemple, ici, lors de l'opération 310, le module 28 remplace le bloc BD_{c} enregistré dans le tampon 14 par un bloc BDᵢ vierge. Lors de cette opération 310, le module 28 initialise toutes les données du bloc BDᵢ vierge à une valeur prédéterminée. Typiquement, cette valeur prédéterminée est la valeur zéro. Ensuite, ce bloc BDᵢ vierge est enregistré dans le tampon 14 à la place du bloc BD_{c}. Toujours lors de cette opération 310, le module 28 initialise aussi à zéro tous les identifiants IP_{i,j} contenus dans le registre B_{IP} de la mémoire 29. Il ré-initialise aussi la valeur du vecteur ivᵢ contenue dans le registre Rᵢᵥ. Par exemple, la nouvelle valeur du vecteur ivᵢ contenu dans le registre Rᵢᵥ est générée par tirage aléatoire ou pseudo-aléatoire. Enfin, l'adresse @_{BDCi} du bloc BDCᵢ chargé est aussi enregistrée dans la mémoire 29. Ainsi, dans le cas où la vérification de l'intégrité du bloc BDCᵢ échoue, c'est un bloc BDᵢ vierge qui est enregistré dans le tampon 14.

Après l'opération 308 ou 310, le procédé se poursuit par l'étape 176 ou l'étape 190 selon que l'instruction à exécuter est une instruction de chargement ou une instruction d'écriture.

L'étape 400 débute par une opération 402 de transformation du bloc BD_{c} en un bloc BDC_{c}.

Pour cela, lors d'une sous-opération 404, le module 28 commence par générer un nouveau vecteur ivᵢ. Le nouveau vecteur ivᵢ est par exemple généré à partir de l'ancienne valeur de ce vecteur ivᵢ enregistrée dans le registre Rᵢᵥ. Par exemple, le nouveau vecteur ivᵢ est obtenu en incrémentant cette ancienne valeur d'un pas prédéterminé.

Ensuite, lors d'une sous opération 406, le module 28 chiffre le bloc BD_{c} actuellement contenu dans le tampon 14 en utilisant pour cela la clé ka et le nouveau vecteur ivᵢ généré lors de la sous-opération 404. A l'issue de cette opération, le cryptogramme BD_{c}* est obtenu.

Lors d'une sous-opération 408, le module 28 construit les métadonnées MD_{c}. Pour cela, le module enregistre, dans les emplacements réservés à cet effet, les identifiants IP_{i,j} actuellement contenus dans le registre B_{IP} et le vecteur ivᵢ enregistré dans le registre Rᵢᵥ. Ensuite, le module 28 calcule le nouveau code MAC_{c} à partir du cryptogramme BD_{c}* obtenu à l'issue de la sous-opération 406 et des métadonnées MD_{c} construites.

Enfin, une fois le nouveau code MAC_{c} calculé, à la fin de la sous-opération 408, le module 28 regroupe dans un même bloc de données, le cryptogramme BD_{c}*, les métadonnées construites MD_{c} et le nouveau code MAC_{c} afin d'obtenir un nouveau bloc BDC_{c}.

Après, lors d'une opération 410, le nouveau bloc BDC_{c} est enregistré dans l'ensemble 4 à l'adresse physique correspond à l'adresse @_{BDCc} actuellement contenue dans la mémoire 29.

L'étape 400 s'achève alors et le procédé se poursuit par l'étape 300.

La figure 7 représente un compilateur 500 apte à générer automatiquement le code binaire 30 à partir d'un code source 502 du programme d'ordinateur. À cet effet, le compilateur 500 comporte typiquement un microprocesseur 504 programmable et une mémoire 506. La mémoire 506 contient les instructions et les données nécessaires pour, lorsqu'elles sont exécutées par le microprocesseur 504, générer automatiquement le code binaire 30 à partir du code source 502. Par exemple, pour cela, le compilateur parcourt le code source 502 et génère, pour chaque pointeur PD_{i,j} à protéger, l'identifiant IP_{i,j} de ce pointeur. L'identifiant IP_{i,j} ainsi généré est enregistré dans la plage P₂ de ce pointeur IP_{i,j}. Après cela, les bloc BDCᵢ qui seront ensuite enregistrés dans la partie 44 de la mémoire MP après chargement de ce code binaire 30 dans cette mémoire MP, sont générés. Plus précisément, lors de la compilation, le compilateur 500 transforme chaque bloc BDᵢ en clair destiné à être enregistré dans la partie 44 de la mémoire MP en un bloc BDCᵢ de façon similaire à ce qui a été décrit en référence au procédé de la figure 6. En particulier, pour chaque donnée D_{i,j} du bloc BDᵢ accédée à l'aide d'un pointeur PD_{i,j}, le compilateur insère automatiquement l'identifiant IP_{i,j} de ce pointeur à l'emplacement réservé à cet effet dans les métadonnées MDᵢ. La conception et la réalisation d'un tel compilateur sont à la portée de l'homme du métier à partir des explications données dans cette description.

### CHAPITRE III : VARIANTES

### Variantes de l'appareil 1 :

D'autres modes de réalisation de l'ensemble 4 sont possibles. Par exemple, l'ensemble 4 peut comporter un plus grand nombre ou un plus petit nombre de mémoires caches. Dans un cas très simplifié, l'ensemble 4 ne comporte pas de mémoire cache et comporte, par exemple, seulement la mémoire principale MP.

La mémoire MP peut être une mémoire non volatile. Dans ce cas, il n'est pas nécessaire de copier le code binaire 30 à l'intérieur de cette mémoire avant le lancement de son exécution puisqu'il s'y trouve déjà.

Le fait qu'une mémoire de l'ensemble 4 soit intégrée ou non à l'intérieur du microprocesseur 2 peut être librement modifié. Ainsi, en variante, une ou plusieurs des mémoires caches L1, L2 et L3 sont intégrées à l'intérieur du microprocesseur 2, c'est-à-dire réalisées sur la même puce semi-conductrice que l'unité 10 du microprocesseur 2. En variante, la mémoire MP peut aussi être une mémoire interne intégrée à l'intérieur du microprocesseur 2.

De nombreuses architectures matérielles différentes sont possibles pour réaliser le module 28. En particulier, le module 28 peut être composé par la combinaison de plusieurs blocs matériels du microprocesseur 2 remplissant des fonctions respectives et situés chacun dans une aire différente de la puce du microprocesseur 2.

En variante, le tampon 14 est apte à contenir simultanément plusieurs blocs de données en clair.

### Variantes du code d'authentification :

D'autres méthodes de calcul du code d'authentification sont possibles. Par exemple, en variante, le module 28 calcule un premier code d'authentification uniquement à partir du cryptogramme BDᵢ* et un second code d'authentification uniquement à partir des métadonnées MDᵢ. Dans ce cas, le code d'authentification contenu dans le bloc BDCᵢ est le résultat, par exemple, de la concaténation de ce premier et de ce second codes d'authentification. Ensuite, les premier et second codes d'authentification sont utilisés par le module 28 pour vérifier l'intégrité, respectivement, du cryptogramme BDᵢ* et des métadonnées MDᵢ lors de l'opération 304.

Dans un autre mode de réalisation, le code MACᵢ est calculé à partir du cryptogramme BDᵢ* et sans prendre en compte les métadonnées MDᵢ. Dans ce cas, de préférence, les métadonnées MDᵢ sont alors chiffrées de sorte qu'elles n'apparaissent pas en clair dans le bloc BDCᵢ. Par exemple, elles sont chiffrées à l'aide de la fonction fₖₐ.

Dans une autre variante, le code MACᵢ est calculé à partir des données D_{i,j} en clair et non pas à partir du cryptogramme BD *. Dans ce cas, il faut inverser l'ordre des opérations de vérification de l'intégrité du code d'authentification et de déchiffrement du cryptogramme BDᵢ*. En effet, dans ce cas, les données doivent d'abord être déchiffrées et seulement ensuite, le module 28 est en mesure d'en vérifier l'intégrité.

### Variantes des métadonnées :

En variante les métadonnées MDᵢ comportent d'autres données que les identifiants IP_{i,j} et que le vecteur ivᵢ. Par exemple, les métadonnées peuvent en plus comporter des indicateurs de validité tels que ceux décrits dans la demande américaine déposée le 02/12/2020 sous le numéro 17/109,424. A l'inverse, dans un mode de réalisation simplifié, les métadonnées MDᵢ ne comportent pas le vecteur ivᵢ. Dans ce dernier cas, le vecteur ivᵢ à utiliser pour déchiffrer le cryptogramme BD * est alors stocké différemment. Par exemple, un registre associant, à chaque bloc BDCᵢ, le vecteur ivᵢ nécessaire pour déchiffrer le cryptogramme BDᵢ* est enregistré dans la mémoire MP.

Les métadonnées peuvent être enregistrées dans le tampon 14 ou dans un registre indépendant du tampon 14 et de la mémoire 29. Dans le cas où les métadonnées MDᵢ sont enregistrées dans le tampon 14, celles-ci sont, de préférence, enregistrées dans une plage d'adresses distincte de la plage d'adresses où sont enregistrées les données D_{i,j}. Typiquement, cette plage d'adresses distincte n'est pas adressable par le l'unité 10 de sorte que la présence des métadonnées MDᵢ dans le tampon 14 ne modifie en rien l'adressage des données D_{i,j}. Par contre, les métadonnées MDᵢ sont accessibles par le module 28 pour qu'il puisse mettre en oeuvre les différentes étapes décrites dans le chapitre II.

En variante, lorsque le nouveau vecteur ivᵢ d'un bloc BDCᵢ est généré sans prendre en compte sa précédente valeur, il n'est pas nécessaire de sauvegarder sa précédente valeur dans le registre Rᵢᵥ après le chargement du bloc BDCᵢ dans le tampon 14. C'est par exemple le cas lorsque, à chaque transfert d'un bloc de données du tampon 14 vers l'ensemble 4, le nouveau vecteur ivᵢ est généré par tirage aléatoire ou pseudo aléatoire.

D'autres méthodes de génération d'un nouveau vecteur ivᵢ sont possibles. Par exemple, le nouveau vecteur ivᵢ est pris égal à la précédente valeur du code MACᵢ. Dans ce cas, à chaque fois qu'un bloc BDCᵢ est transféré de l'ensemble 4 vers le tampon 14, le code MACᵢ contenu dans ce bloc BDCᵢ est enregistré dans le microprocesseur, par exemple, dans la mémoire 29.

Le nouveau vecteur ivᵢ peut aussi être complété par d'autres informations pour obtenir un vecteur d'initialisation complet ivcᵢ puis, lors de l'opération 406 de chiffrement, c'est ce vecteur ivcᵢ qui est utilisé à la place du vecteur ivᵢ. Dans ce cas, le cryptogramme BDᵢ* est le résultat de la fonction fₖₐ(BDᵢ ; ivcᵢ). L'opération 306 de déchiffrement doit alors être adaptée en conséquence. Autrement dit, le bloc BDᵢ en clair est le résultat de la fonction fₖₐ⁻¹(BDᵢ* ; ivcᵢ). Par exemple, le vecteur ivcᵢ est obtenu en combinant le vecteur ivᵢ et l'adresse @_{BDCi} contenue dans la mémoire 29. Par exemple, le vecteur ivᵢ et l'adresse @_{BDCi} sont concaténés. Le vecteur ivcᵢ peut aussi être obtenu en combinant le vecteur ivᵢ avec un identifiant du code binaire 30. Dans ce cas, le cryptogramme BDᵢ* obtenu est fonction du code binaire 30 à exécuter. Le vecteur ivcᵢ peut aussi être obtenu en combinant le vecteur ivᵢ, l'adresse @_{BDCi} et l'identifiant du code binaire 30.

### Variantes du procédé :

D'autres modes de réalisation de l'étape 176 sont possibles. Par exemple, lors de l'étape 176, deux identifiants de pointeurs sont dit correspondant si l'écart entre ces deux identifiants est inférieur, en valeur absolue, à un seuil prédéterminé.

L'étape 176 peut aussi être exécutée avant l'étape 304 de vérification de l'intégrité du bloc de données chargés. Dans ce cas, par exemple, les étapes 304, 306, 308 et 310 sont exécutées entre les étapes 176 et 178.

La fonction de chiffrement fₖₐ peut être une fonction de chiffrement par bloc, plus connue sous le terme anglais de "block cipher". Dans ce cas, le cryptogramme BDᵢ* peut uniquement être déchiffré dans sa totalité pour obtenir le bloc BDᵢ en clair et non pas donnée par donnée. La fonction de chiffrement fₖₐ peut aussi être une fonction de chiffrement symétrique qui chiffre les données D_{i,j} du bloc BDᵢ les unes après les autres dans un ordre prédéterminé, par exemple, dans l'ordre croissant des indices j. Dans ce cas, le cryptogramme BDᵢ* doit aussi être déchiffré dans le même ordre prédéterminé. Ainsi, dans ce cas, à partir du cryptogramme BDᵢ*, la fonction fₖₐ⁻¹ permet seulement d'obtenir, les unes après les autres, les données D_{i,j} en clair dans l'ordre croissant des indices j. Par exemple, pour cela, la fonction fₖₐ de chiffrement est une fonction de chiffrement par flux plus connue sous le terme anglais de "stream cipher". Cette fonction fₖₐ de chiffrement par flux est alors initialisée avec le vecteur ivᵢ au début du chiffrement de chaque bloc BDᵢ.

Dans le cas où la fonction fₖₐ⁻¹ permet d'obtenir les données D_{i,j} les unes après les autres, dans un mode de réalisation avantageux, les métadonnées MDᵢ et, en particulier, le vecteur ivᵢ est situé au début du bloc BDCᵢ de données chiffrées de manière à ce que le vecteur ivᵢ soit chargé en premier dans le microprocesseur. Dans ce cas, le module 28 peut commencer à déchiffrer le cryptogramme BDᵢ* au fur et à mesure qu'il est reçu sans attendre que ce cryptogramme BDᵢ* ait été entièrement chargé dans le microprocesseur. Ceci est avantageux lorsque la taille du cryptogramme BDᵢ* est supérieure à la taille du bus de données utilisé pour le transférer vers le microprocesseur. En effet, dans une telle situation, le cryptogramme BDᵢ* est transféré par parties successives vers le microprocesseur. Il faut donc exécuter, les unes après les autres, plusieurs opérations de transfert entre l'ensemble 4 de mémoires chiffrées et le microprocesseur pour transférer le cryptogramme BDᵢ* complet. Lorsque le vecteur ivᵢ est reçu en premier, le déchiffrement de la première partie reçue du cryptogramme BDᵢ* peut débuter avant que la partie suivante du cryptogramme BDᵢ* soit reçue. Ainsi, l'exécution de la fonction fₖₐ⁻¹ permet d'obtenir, d'abord la donnée D_{i,1}, puis la donnée D_{i,2} et ainsi de suite jusqu'à la donnée D_{i,Nd}.. Dans ce mode de réalisation, l'opération 302 de chargement et l'opération 306 de déchiffrement sont, en partie, réalisées en parallèle. Dans cette variante, le code MACᵢ est construit à partir du bloc BDᵢ en clair et non pas à partir du cryptogramme BDᵢ*. L'opération 304 de vérification du code MACᵢ est alors exécutée une fois que le cryptogramme complet BDCᵢ a été reçu et déchiffré. Il est aussi possible d'enregistrer temporairement chaque partie reçue du cryptogramme BDCᵢ dans le microprocesseur puis d'exécuter l'opération 304 comme précédemment décrit, c'est-à-dire à partir du cryptogramme BDi* complet et non pas à partir du bloc BDᵢ de données en clair. Avantageusement, dans ce mode de réalisation, pour gagner encore plus de temps, une donnée D_{i,j} qui vient d'être déchiffrée peut être utilisée et traitée par le microprocesseur avant que le code MACᵢ ait été vérifié et donc avant que l'opération 304 soit terminée. Ainsi, dans ce mode de réalisation, les étapes 176 et 190 peuvent être exécutées avant que l'opération 304 soit terminée. Si ultérieurement, la vérification de l'intégrité du bloc BDCᵢ échoue, alors l'opération 310 est immédiatement déclenchée pour inhiber tout usage ultérieur des données de ce bloc BDᵢ. Si ultérieurement, au contraire, la vérification de l'intégrité du bloc BDCᵢ réussit, alors la poursuite de l'utilisation des données du bloc BDᵢ est autorisée.

Lorsque la vérification de l'intégrité du code MACᵢ échoue, une ou plusieurs des contre-mesures précédemment décrites peuvent être déclenchées et exécutées.

En variante, une autre relation que la relation (1) est utilisée pour déterminer l'adresse @_{BDCi} où est enregistré le bloc BDCᵢ. Dans ce cas, la relation (2) doit être adaptée en conséquence. Par exemple, dans un mode de réalisation particulièrement souple, le module 28 comporte une table de correspondance qui, à chaque adresse @_{BDi} d'un bloc BDᵢ en clair associe l'adresse @_{BDCi} du bloc BDCᵢ contenant les données D_{i,j} sous forme chiffrée. Dans un tel cas, le module 28 peut déterminer l'adresse @_{BDCi} du bloc contenant la donnée D_{i,j} située à l'adresse @_{Di,j} en mettant en oeuvre les étapes suivantes :
- Étape 1 : le module 28 calcule l'adresse @_{BDi} du bloc BDᵢ qui contient la donnée D_{i,j} à l'aide de la relation suivante : @_{BDi}= E(@_{Di,j}/T_{BD}).T_{BD}, puis
- Etape 2 : le module 28 recherche dans la table de correspondance l'adresse @_{BDCi} associée à l'adresse @_{BDi} calculée.

Le fait que les tailles T_{b} et T_{BD} soient toutes les deux des puissances de deux impose que la taille T_{b} est deux fois plus grande que la taille T_{BD}. Ainsi à chaque fois que la taille T_{BD} est augmentée, la taille T_{b} doit aussi être augmentée de façon proportionnelle. Cela revient donc à augmenter l'espace disponible pour stocker les métadonnées MDᵢ et le code MACᵢ. Or, il n'est pas toujours souhaitable d'augmenter l'espace disponible pour stocker les métadonnées MDᵢ et le code MACᵢ car cela revient à occuper plus de place en mémoire, sans que cela se traduise nécessairement par une amélioration des performances de l'appareil 1. Ainsi, en variante, la taille T_{b} n'est pas égale à deux fois la taille T_{BD}. Par exemple, la taille T_{b} est plus petite que 2T_{BD}. Dans ce dernier cas, de préférence, les tailles T_{b} et T_{BD} sont alors choisies de manière à ce que le nombre (T_{b}-T_{BD}) et la taille T_{BD} sont tous les deux des puissances de deux. Dans ce cas, la relation (1) est remplacée par la relation (3) suivante : @_{BDCi}=@_{BDi}+@_{BDi}(T_{b}-T_{BD})/T_{BD}. La relation (2) est remplacée par la relation (4) suivante : @_{BDCi}=E(@_{Di,j}/T_{BD}).T_{BD}+E(@_{Di,j}/T_{BD})(T_{b}-T_{BD}). Dans les relations (3) et (4), les multiplications et les divisions peuvent toujours être réalisées en utilisant les registres à décalage du module 28 et donc très rapidement. Par contre, par rapport au cas où ce sont les relations (1) et (2) qui sont utilisées, il faut réaliser une opération d'addition en plus pour calculer l'adresse @_{BDCi}. Par conséquent, cette variante est un peu moins rapide que ce qui a été décrit dans le chapitre II. Par contre, elle présente l'avantage d'autoriser une taille T_{BD} qui est supérieure à la taille (T_{b}-T_{BD}), c'est-à-dire supérieure à la taille des métadonnées MDᵢ et du code MACᵢ.

Ce qui a été décrit en détail dans le cas particulier de la partie 44 de la mémoire MP, s'applique à tout autre partie de la mémoire MP contenant des données à protéger. Par exemple, cela peut aussi être appliqué à la pile 46 ou au tas 48. Dans le cas du tas 48, comme déjà indiqué précédemment, l'identifiant IP_{i,j} est généré en même temps que le pointeur PD_{i,j}, c'est-à-dire non pas lors de la compilation mais lors de l'exécution du code binaire 30. Ensuite, l'identifiant IP_{i,j} est enregistré dans le registre B_{IP}, de préférence, à chaque fois qu'une donnée D_{i,j} est écrite, à l'aide de ce pointeur PD_{i,j}, dans la zone de mémoire allouée dynamiquement.

Dans l'exemple détaillé de mode de réalisation, le transfert par blocs entiers entre l'ensemble 4 et le microprocesseur 2 est uniquement mis en oeuvre pour les données et pas pour les instructions du code machine 30. Dans ce cas, les instructions sont enregistrées dans l'ensemble 4 de façon conventionnelle. Ainsi, dans ce mode de réalisation, les instructions sont transférées une par une vers le microprocesseur 2. De plus, dans ce cas, les instructions ne sont pas nécessairement enregistrées sous forme chiffrée dans l'ensemble 4. Toutefois, tout ce qui a été décrit ici dans le cas particulier des données peut aussi être appliqué aux instructions du code machine 32. Par la suite, lorsqu'un bloc contient des instructions, il est appelé "bloc d'instructions". Par exemple, comme décrit dans le cas particulier des données, le code machine est divisé en blocs d'instructions successifs et contigus. Par exemple, dans un premier mode de réalisation, la structure des bloc de données et des blocs d'instructions sont identiques. De plus, les fonctionnements dans le cas des blocs de données et dans le cas des blocs d'instructions sont identiques. A partir de l'enseignement donné ici dans le cas particulier des blocs de données, l'homme du métier est capable de le transposer, sans difficulté, au cas des instructions. Il est donc seulement souligné que, dans le cas des instructions, l'adresse de la prochaine instruction à charger dans le microprocesseur 2 est contenue dans le compteur ordinal 26 et non pas dans une instruction de chargement exécutée par l'unité 10. Il est également souligné que, de préférence, le tampon utilisé pour stocker un bloc d'instructions en clair est un tampon, par exemple structurellement identique au tampon 14, mais distinct du tampon 14 et dédié au stockage d'un bloc d'instruction. Enfin, il faut remarquer que dans le cas des instructions, les pointeurs d'instructions sont souvent utilisés pour appeler des fonctions et ils sont donc également connus sous le terme de "pointeur de fonction". L'intérêt de traiter exactement de la même manière les instructions et les données est aussi d'harmoniser ces traitements et, par conséquent, de simplifier la réalisation du module 28 de sécurisation.

### Autres variantes :

Les différents modes de réalisation et les différentes variantes ont jusqu'à présent été décrits dans le cas particulier où la mémoire déchiffrée est le tampon 14 et la mémoire chiffrée est l'ensemble 4 de mémoire, c'est-à-dire la mémoire de rang juste supérieur. Toutefois, l'enseignement donné ici s'applique à toutes mémoires déchiffrée et chiffrée entre lesquelles des données sont transférées par bloc entier de données chiffrées et authentifiées. Par exemple, en variante, la mémoire déchiffrée est la mémoire cache L1 et la mémoire chiffrée est la mémoire cache L2. Dans ce cas, le module de sécurisation est, par exemple, implémenté dans la mémoire cache L1 pour chiffrer et déchiffrer les blocs BDCᵢ qui sont transférés entre ces deux mémoires cache L1 et L2. On notera que dans ce cas, les données sont en clair dans la mémoire cache L1 et sont chiffrées dans la mémoire cache L2. A partir du moment où les données sont chiffrées dans la mémoire cache L2, celles-ci seront nécessairement chiffrées dans les mémoires de rang supérieur. Ce qui est décrit ici peut aussi être appliqué entre les mémoires cache L2 et L3 ou entre la mémoire cache L3 et la mémoire principale MP.

Dans le cas où le module de sécurisation est seulement implémenté entre deux niveaux de mémoire supérieure au tampon 14, le tampon 14 peut être supprimé.

Les modes de réalisation décrits ici peuvent aussi être mis en oeuvre dans un appareil dépourvu de mécanisme de mémoire virtuelle. Dans ce cas, la fonction bijective qui relie les adresses virtuelles aux adresses physiques correspondantes est la fonction identité. L'unité MMU est alors omise.

### Chapitre IV : Avantages des modes de réalisation décrits

L'étape 176 de vérification de la correspondance entre les premier et second identifiants IP_{i,j} permet de détecter pratiquement tous les usages erronés d'un pointeur. Par exemple, l'étape 176 détecte une utilisation incorrecte d'un pointeur PDₖ pour lire la donnée D_{i,j}. Plus précisément, si un autre pointeur PDₖ, différent du pointeur PD_{i,j} attendu, est utilisé pour lire la donnée D_{i,j}, c'est l'identifiant IPₖ qui est comparé à l'identifiant IP_{i,j} extrait des métadonnées MDᵢ. Par conséquent, cet usage erroné du pointeur PDₖ est détecté et déclenche donc le signalement d'une faute d'exécution. Si le pointeur PDₖ est utilisé pour écrire une donnée Dₖ à la place de la donnée D_{i,j}, alors l'identifiant IPₖ du pointeur PDₖ est enregistré à la place de l'identifiant IP_{i,j}. Par la suite, si le pointeur PD_{i,j} est utilisé pour lire la donnée Dₖ, l'identifiant IP_{i,j} contenu dans le pointeur PD_{i,j} est différent de l'identifiant IPₖ contenu dans les métadonnées MDᵢ. Dès lors, cette utilisation erronée du pointeur PDₖ est aussi détectée. Grâce à cela, les attaques par dépassement de tampon sont détectées.

De même, l'étape 176 permet de détecter l'utilisation du pointeur PD_{i,j} après que la zone de mémoire contenant la donnée D_{i,j} ait été libérée. En effet, typiquement, après la libération de cette zone de mémoire, celle-ci est réutilisée pour y enregistrer d'autres données. Pour réutiliser cette zone de mémoire, un nouveau pointeur PDₖ est généré puis utilisé pour enregistrer des données dans cette zone de mémoire. Ce nouveau pointeur PDₖ comporte un identifiant IPₖ différent de l'identifiant IP_{i,j}. Ensuite, si le pointeur PD_{i,j} est utilisé pour lire l'une des données écrite en utilisant le pointeur PDₖ, ceci est détecter. En effet, dans ce cas là aussi, les identifiants de pointeur contenus, d'un coté dans le pointeur PD_{i,j}, et de l'autre coté, dans les métadonnées MDₖ ne correspondent pas. Ainsi, l'étape 176 permet de détecter des attaques utilisant des "dangling pointer" ou des attaques du type "use-after-free".

Le fait de calculer le code MACᵢ contenu dans le bloc BDCᵢ à partir des identifiant IP_{i,j} rend la falsification des valeurs de ces identifiants très difficile. Cela accroît donc la sécurité du procédé d'exécution.

Le fait d'enregistrer le vecteur ivᵢ dans les métadonnées MDᵢ permet simplement d'enregistrer puis de retrouver chaque vecteur ivᵢ nécessaire pour déchiffrer le cryptogramme BDᵢ*.

Le fait que le module 28 exécute lui-même les différentes opérations liées au chiffrement, déchiffrement et vérification des données rend transparent le procédé de sécurisation des données pour l'unité 10. En pratique, l'unité 10 fonctionne comme si toutes les données étaient en clair sans avoir à se préoccuper du chiffrement et du déchiffrement ni de la présence des métadonnées MDᵢ dans la mémoire chiffrée.

Le fait d'utiliser un chiffrement par flux et d'enregistrer, dans le bloc BDCᵢ, le vecteur ivᵢ avant le cryptogramme BDᵢ*, permet de débuter le déchiffrement de la donnée BD_{i,1} avant que le microprocesseur ait reçu le cryptogramme BD * complet. Cela permet donc d'accélérer l'exécution du procédé.

Le fait que le module 28 calcule lui-même l'adresse @_{BDCi} du bloc BDCᵢ à partir de laquelle peut être chargée une donnée D_{i,j} à accéder rend la présence des métadonnées MDᵢ et du code MACᵢ transparente pour l'unité 10. En effet, c'est le module 28 qui réalise la conversion d'adresse et non pas l'unité 10.

## Revendications

1. Procédé d'exécution d'un programme d'ordinateur par un appareil électronique comportant un microprocesseur, une mémoire déchiffrée, une mémoire chiffrée et un module matériel de sécurisation, dans lequel, lors de l'exécution du programme d'ordinateur, le transfert des lignes de code entre la mémoire déchiffrée et la mémoire chiffrée se fait par bloc entier de plusieurs lignes de code chiffrées et authentifiées, ce procédé comportant les étapes suivantes:
a) l'enregistrement (410) dans la mémoire chiffrée d'un bloc de lignes de code chiffrées et authentifiées contenant une ligne de code à accéder à l'aide d'un pointeur, ce bloc de lignes de code chiffrées et authentifiées contenant :
- un cryptogramme de l'ensemble des lignes de code de ce bloc, ce cryptogramme devant être déchiffré dans sa totalité pour obtenir un bloc de lignes de code en clair,
- un code d'authentification calculé à partir du bloc de lignes de code en clair ou à partir du cryptogramme du bloc de lignes de code en clair, et
- des métadonnées,
b) l'obtention (166), par le microprocesseur, d'un pointeur contenant l'adresse à laquelle est enregistrée la ligne de code à accéder, puis
c) le chargement (302) du bloc contenant la ligne de code à accéder depuis la mémoire chiffrée vers le microprocesseur, et
d) le déchiffrement (306) du cryptogramme contenu dans le bloc chargé pour obtenir le bloc de lignes de code en clair, et l'enregistrement (308) du bloc de lignes de code en clair obtenu dans la mémoire déchiffrée et l'enregistrement des métadonnées du bloc chargé, et
e) la vérification (304), par le module matériel de sécurisation et à l'aide du code d'authentification contenu dans le bloc chargé, de l'intégrité :
- du bloc de lignes de codes en clair obtenu à partir du cryptogramme contenu dans le bloc chargé, ou
- du cryptogramme contenu dans le bloc chargé,
f) lorsque cette vérification échoue, l'inhibition (310) du traitement, par le microprocesseur, des lignes de code de ce bloc chargé et, lorsque cette vérification réussie, l'autorisation du traitement, par le microprocesseur, des lignes de code de ce bloc chargé,
dans lequel:
- l'étape a) comporte l'incorporation (408), dans les métadonnées du bloc contenant la ligne de code à accéder, d'un premier identifiant de pointeur associé à la ligne de code à accéder, ce premier identifiant de pointeur permettant à lui seul d'identifier de façon unique un pointeur parmi un ensemble contenant plusieurs pointeurs différents mis en oeuvre lors de la même exécution du programme d'ordinateur par le microprocesseur,
- l'étape b) d'obtention (166) du pointeur comporte l'obtention d'un pointeur comprenant :
- une première plage de bits contenant l'adresse de la ligne de code à accéder, et
- une seconde plage différente de bits contenant un second identifiant de pointeur, et
- le procédé comporte une étape g) de vérification (176), par le module matériel de sécurisation, que le second identifiant de pointeur contenu dans le pointeur obtenu lors de l'étape b) correspond au premier identifiant de pointeur associé à la ligne de code à accéder et contenu dans les métadonnées du bloc chargé, et lorsque les premier et second identifiants de pointeur ne correspondent pas, alors le module de sécurisation déclenche (180) le signalement d'une faute d'exécution et, dans le cas contraire, le module de sécurisation inhibe (178) le déclenchement du signalement d'une faute d'exécution et le microprocesseur traite la ligne de code à accéder.

2. Procédé selon la revendication 1, dans lequel l'étape d) comporte l'enregistrement (308) du premier identifiant de pointeur contenu dans les métadonnées du bloc chargé dans une mémoire uniquement accessible par le module matériel de sécurisation.

3. Procédé selon l'une quelconque des revendications précédentes, dans lequel, avant l'étape a), le code d'authentification du bloc de lignes de code chiffrées et authentifiées à enregistrer, est aussi calculé (408) à partir des métadonnées.

4. Procédé selon l'une quelconque des revendications précédentes, dans lequel, avant l'étape a), le procédé comporte :
- le chiffrement (406) du bloc de lignes de code en clair en utilisant un vecteur d'initialisation et la génération (404) d'un nouveau vecteur d'initialisation avant chaque chiffrement du bloc de lignes de code en clair, et
- l'incorporation (408) dans les métadonnées du bloc de lignes de code chiffrées et authentifiées, du vecteur d'initialisation utilisé pour obtenir le cryptogramme de ce bloc de lignes de code chiffrées et authentifiées, et
- lors du déchiffrement (306) du cryptogramme, le module matériel de sécurisation extrait des métadonnées du bloc de lignes de code chiffrées et authentifiées, le vecteur d'initialisation à utiliser pour réaliser ce déchiffrement.

5. Procédé selon la revendication 4, dans lequel :
- lors du chiffrement du bloc de lignes de code en clair, les lignes de code en clair sont chiffrées à l'aide d'une fonction de chiffrement par flux initialisée à l'aide du vecteur d'initialisation, et
- le vecteur d'initialisation est enregistré dans le bloc de lignes de code chiffrées et authentifiées avant le cryptogramme de l'ensemble des lignes de code de ce bloc, puis
- lors du déchiffrement du cryptogramme, le module matériel de sécurisation extrait d'abord le vecteur d'initialisation à utiliser pour réaliser ce déchiffrement puis débute immédiatement le déchiffrement de la première ligne de code du cryptogramme reçue avant d'avoir reçu le cryptogramme complet.

6. Procédé selon l'une quelconque des revendications précédentes, dans lequel, lors de l'étape a), l'adresse à laquelle est enregistrée le bloc de lignes de code chiffrées et authentifiées est reliée, par une fonction bijective, à une adresse @_{BDCi} définie par la relation suivante : @_{BDCi} = @_{BDi}.T_{b}/T_{BD}, où :
- @_{BDi} est l'adresse où débute, dans l'espace d'adressage du programme d'ordinateur, le bloc de lignes de code en clair,
- T_{b} est la taille, en nombre d'octets, du bloc de lignes de code chiffrées et authentifiées,
- T_{BD} est la taille, en nombre d'octets, du bloc de lignes de code en clair.

7. Procédé selon la revendication 6, dans lequel :
- après l'étape b) et avant l'étape c), le module matériel de sécurisation détermine (172) l'adresse @_{BDCi} à l'aide de la première relation suivante : @_{BDCi} = E(@_{Di,j}/T_{BD}).T_{b}, où
- E() est la fonction qui retourne la partie entière du nombre situé entre les parenthèses, et
- @_{Di,j} est l'adresse contenue dans le pointeur obtenu à l'étape b),
- T_{b} et T_{BD} sont tous les deux des puissances de deux,
lors de cette détermination, la division et la multiplication de la première relation sont exécutées par des registres à décalage du module matériel de sécurisation, puis
- lors de l'étape c), le bloc contenant la ligne de code à accéder est chargé, depuis la mémoire chiffrée, à partir de l'adresse reliée, par la fonction bijective, à l'adresse @_{BDCi} déterminée.

8. Procédé selon la revendication 6, dans lequel :
- après l'étape b) et avant l'étape c), le module matériel de sécurisation détermine l'adresse @_{BDCi} à l'aide de la seconde relation suivante : @_{BDCi}= E(@_{Di,j}/T_{BD}).T_{BD} + E(@_{Di,j}/T_{BD}).(T_{b}-T_{BD}), où
- E() est la fonction qui retourne la partie entière du nombre situé entre les parenthèses, et
- @_{Di,j} est l'adresse contenue dans le pointeur obtenu à l'étape b),
- (T_{b}-T_{BD}) et T_{BD} sont tous les deux des puissances de deux,
lors de cette détermination, chaque division et chaque multiplication de la seconde relation sont exécutées par des registres à décalage du module matériel de sécurisation, et
- lors de l'étape c), le bloc contenant la ligne de code à accéder est chargé, depuis la mémoire chiffrée, à partir de l'adresse reliée, par la fonction bijective, à l'adresse @_{BDCi} déterminée.

9. Procédé selon l'une quelconque des revendications précédentes, dans lequel le cryptogramme de l'ensemble des lignes de code du bloc de lignes de code chiffrées et authentifiées enregistré (402) :
- peut uniquement être déchiffré dans sa totalité pour obtenir le bloc de lignes de code en clair et non pas ligne de code par ligne de code, ou
- peut uniquement être déchiffré dans un ordre prédéterminé pour obtenir le bloc de lignes de code en clair et ne permet pas un déchiffrement des lignes de code dans un ordre quelconque.

10. Programme d'ordinateur apte à être exécuté par un microprocesseur en mettant en oeuvre un procédé conforme à l'une quelconque des revendications précédentes, dans lequel le code binaire du programme d'ordinateur comporte :
- un bloc de lignes de code chiffrées et authentifiées contenant une ligne de code à accéder à l'aide d'un pointeur respectif, ce bloc de lignes de code chiffrées et authentifiées contenant :
- un cryptogramme (BDᵢ*) de l'ensemble des lignes de code de ce bloc, ce cryptogramme devant être déchiffré dans sa totalité pour obtenir un bloc de lignes de code en clair,
- un code d'authentification (MACᵢ) calculé à partir du bloc de lignes de code en clair ou à partir du cryptogramme du bloc de lignes de code en clair, et
- des métadonnées (MDᵢ),
- un pointeur contenant l'adresse à laquelle est enregistrée la ligne de code à accéder
dans lequel:
- les métadonnées (MDᵢ) comporte un premier identifiant de pointeur associé à la ligne de code à accéder, ce premier identifiant de pointeur permettant à lui seul d'identifier de façon unique un pointeur parmi un ensemble contenant plusieurs pointeurs différents mis en oeuvre lors de la même exécution du programme d'ordinateur par le microprocesseur, et
- le pointeur comprend :
- une première plage de bits contenant l'adresse de la ligne de code à accéder, et
- une seconde plage différente de bits contenant un second identifiant de pointeur, ce second identifiant de pointeur étant égal au premier identifiant de pointeur.

11. Module matériel (28) de sécurisation pour la mise en oeuvre d'un procédé conforme à l'une quelconque des revendications 1 à 9, dans lequel le module matériel est configuré pour :
a) déclencher l'enregistrement dans la mémoire chiffrée d'un bloc de lignes de code chiffrées et authentifiées contenant une ligne de code à accéder à l'aide d'un pointeur, ce bloc de lignes de code chiffrées et authentifiées contenant :
- un cryptogramme de l'ensemble des lignes de code de ce bloc, ce cryptogramme devant être déchiffré dans sa totalité pour obtenir un bloc de lignes de code en clair,
- un code d'authentification calculé à partir du bloc de lignes de code en clair ou à partir du cryptogramme du bloc de lignes de code en clair, et
- des métadonnées,
b) recevoir un pointeur contenant l'adresse à laquelle est enregistrée la ligne de code à accéder, puis
c) déclencher le chargement du bloc contenant la ligne de code à accéder depuis la mémoire chiffrée vers le microprocesseur, et
d) déchiffrer le cryptogramme contenu dans le bloc chargé pour obtenir le bloc de lignes de code en clair, et déclencher l'enregistrement du bloc de lignes de code en clair obtenu dans la mémoire déchiffrée et l'enregistrement des métadonnées du bloc chargé,
e) vérifier, à l'aide du code d'authentification contenu dans le bloc chargé, l'intégrité :
- du bloc de lignes de codes en clair obtenu à partir du cryptogramme contenu dans le bloc chargé, ou
- du cryptogramme contenu dans le bloc chargé,
f) lorsque cette vérification échoue, inhiber le traitement, par le microprocesseur, des lignes de code de ce bloc chargé et, lorsque cette vérification réussie, autoriser le traitement, par le microprocesseur, des lignes de code de ce bloc chargé, le module de sécurisation est également configuré
- pour incorporer, dans les métadonnées du bloc contenant la ligne de code à accéder, un premier identifiant de pointeur associé à la ligne de code à accéder, ce premier identifiant de pointeur permettant à lui seul d'identifier de façon unique un pointeur parmi un ensemble contenant plusieurs pointeurs différents mis en oeuvre lors de la même exécution du programme d'ordinateur par le microprocesseur,
- en réponse à l'exécution d'une instruction d'accès à la ligne de code à accéder à l'aide d'un pointeur, pour extraire un second identifiant de pointeur dans une plage de bits de ce pointeur, puis
- pour vérifier que le second identifiant de pointeur correspond au premier identifiant de pointeur associé à la ligne de code à accéder et contenu dans les métadonnées du bloc chargé, et si les premier et second identifiants de pointeur ne correspondent pas, alors déclencher le signalement d'une faute d'exécution et, dans le cas contraire, inhiber le déclenchement du signalement d'une faute d'exécution et autoriser le microprocesseur à traiter la ligne de code à accéder.

## Patentansprüche

1. Verfahren zur Ausführung eines Computerprogramms durch ein elektronisches Gerät, das einen Mikroprozessor, einen entschlüsselten Speicher, einen verschlüsselten Speicher und ein Hardware-Sicherungsmodul aufweist, wobei bei der Ausführung des Computerprogramms die Übertragung der Codezeilen zwischen dem entschlüsselten Speicher und dem verschlüsselten Speicher in ganzen Blöcken mehrerer verschlüsselter und authentifizierter Codezeilen erfolgt, wobei dieses Verfahren die folgenden Schritte aufweist:
a) das Speichern (410), im verschlüsselten Speicher, eines Blocks von verschlüsselten und authentifizierten Codezeilen, der eine mit Hilfe eines Zeigers zuzugreifende Codezeile enthält, wobei dieser Block von verschlüsselten und authentifizierten Codezeilen enthält:
- ein Kryptogramm der Gesamtheit der Codezeilen dieses Blocks, wobei dieses Kryptogramm als Ganzes entschlüsselt werden muss, um einen Block von unverschlüsselten Codezeilen zu erlangen,
- einen Authentifizierungscode berechnet ausgehend vom Block von unverschlüsselten Codezeilen oder ausgehend vom Kryptogramm des Blocks von unverschlüsselten Codezeilen, und
- Metadaten,
b) das Erlangen (166), durch den Mikroprozessor, eines Zeigers, der die Adresse enthält, an der die zuzugreifende Codezeile gespeichert ist, dann
c) das Laden (302) des die zuzugreifende Codezeile enthaltenden Blocks ausgehend vom verschlüsselten Speicher zum Mikroprozessor, und
d) das Entschlüsseln (306) des im geladenen Block enthaltenen Kryptogramms, um den Block von unverschlüsselten Codezeilen zu erlangen, und das Speichern (308) des erlangten Blocks von unverschlüsselten Codezeilen im entschlüsselten Speicher und das Speichern der Metadaten des geladenen Blocks, und
e) das Überprüfen (304), durch das Hardware-Sicherungsmodul und mit Hilfe des im geladenen Block enthaltenen Authentifizierungscodes, der Integrität:
- des erlangten Blocks von unverschlüsselten Codezeilen ausgehend vom im geladenen Block enthaltenen Kryptogramm, oder
- des im geladenen Block enthaltenen Kryptogramms,
f) wenn diese Überprüfung fehlschlägt, die Verhinderung (310) der Verarbeitung, durch den Mikroprozessor, der Codezeilen dieses geladenen Blocks und, wenn diese Überprüfung gelingt, die Erlaubnis der Verarbeitung, durch den Mikroprozessor, der Codezeilen dieses geladenen Blocks,
wobei
- der Schritt a) die Eingliederung (408), in die Metadaten des die zuzugreifende Codezeile enthaltenden Blocks, einer ersten Zeigerkennung, die der zuzugreifenden Codezeile zugeordnet ist, wobei diese erste Zeigerkennung alleine es ermöglicht, eindeutig einen Zeiger unter einer mehrere verschiedene Zeiger enthaltenden Gesamtheit zu identifizieren, die bei der gleichen Ausführung des Computerprogramms durch den Mikroprozessor angewendet werden,
- der Schritt b) des Erlangens (166) des Zeigers das Erlangen eines Zeigers aufweist, der enthält:
- einen ersten Bitbereich, der die Adresse der zuzugreifenden Codezeile enthält, und
- einen zweiten anderen Bitbereich, der eine zweite Zeigerkennung enthält, und
- das Verfahren einen Schritt g) der Überprüfung (176) durch das Hardware-Sicherungsmodul aufweist, dass die zweite Zeigerkennung, die in dem im Schritt b) erlangten Zeiger enthalten ist, der ersten Zeigerkennung entspricht, die der zuzugreifenden Codezeile zugeordnet und in den Metadaten des geladenen Blocks enthalten ist, und wenn die ersten und zweiten Zeigerkennungen nicht übereinstimmen, das Sicherungsmodul die Signalisierung eines Ausführungsfehlers auslöst (180), und im gegenteiligen Fall das Sicherungsmodul das Auslösen der Signalisierung eines Ausführungsfehlers verhindert (178) und der Mikroprozessor die zuzugreifende Codezeile verarbeitet.

2. Verfahren nach Anspruch 1, wobei der Schritt d) das Speichern (308) der in den Metadaten des geladenen Blocks enthaltenen ersten Zeigerkennung in einem Speicher enthält, der nur für das Hardware-Sicherungsmodul zugänglich ist.

3. Verfahren nach einem der vorhergehenden Ansprüche, wobei vor dem Schritt a) der Authentifizierungscode des zu speichernden Blocks von verschlüsselten und authentifizierten Codezeilen auch ausgehend von den Metadaten berechnet wird (408).

4. Verfahren nach einem der vorhergehenden Ansprüche, wobei das Verfahren vor dem Schritt a) aufweist:
- das Verschlüsseln (406) des Blocks von unverschlüsselten Codezeilen unter Verwendung eines Initialisierungsvektors und das Erzeugen (404) eines neuen Initialisierungsvektors vor jeder Verschlüsselung des Blocks von unverschlüsselten Codezeilen, und
- das Eingliedern (408) in die Metadaten des Blocks von verschlüsselten und authentifizierten Codezeilen des Initialisierungsvektors, der verwendet wird, um das Kryptogramm dieses Blocks von verschlüsselten und authentifizierten Codezeilen zu erlangen, und
- beim Entschlüsseln (306) des Kryptogramms extrahiert das Hardware-Sicherungsmodul aus den Metadaten des Blocks von verschlüsselten und authentifizierten Codezeilen den Initialisierungsvektor, der zur Durchführung dieser Entschlüsselung zu verwenden ist.

5. Verfahren nach Anspruch 4, wobei:
- beim Verschlüsseln des Blocks von unverschlüsselten Codezeilen die unverschlüsselten Codezeilen mit Hilfe einer Stromverschlüsselungsfunktion verschlüsselt werden, die mit Hilfe des Initialisierungsvektors initialisiert wird, und
- der Initialisierungsvektor im Block von verschlüsselten und authentifizierten Codezeilen vor dem Kryptogramm der Gesamtheit der Codezeilen dieses Blocks gespeichert wird, dann
- beim Entschlüsseln des Kryptogramms das Hardware-Sicherungsmodul zunächst den Initialisierungsvektor extrahiert, der zur Durchführung dieser Entschlüsselung zu verwenden ist, dann direkt die Entschlüsselung der ersten empfangenen Codezeile des Kryptogramms beginnt, ehe es das vollständige Kryptogramm empfangen hat.

6. Verfahren nach einem der vorhergehenden Ansprüche, wobei im Schritt a) die Adresse, an der der Block von verschlüsselten und authentifizierten Codezeilen gespeichert ist, durch eine eineindeutige Funktion mit einer Adresse @_{BDCi} verbunden wird, die durch die folgende Beziehung definiert ist: @_{BDCi} = @_{BDi}.T_{b}/T_{BD}, wobei:
- @_{BDi} die Adresse ist, wo im Adressraum des Computerprogramms der Block von unverschlüsselten Codezeilen beginnt,
- T_{b} die Größe, in Anzahl von Bytes, des Blocks von verschlüsselten und authentifizierten Codezeilen ist,
- T_{BD} die Größe, in Anzahl von Bytes, des Blocks von unverschlüsselten Codezeilen ist.

7. Verfahren nach Anspruch 6, wobei:
- nach dem Schritt b) und vor dem Schritt c) das Hardware-Sicherungsmodul die Adresse @_{BDCi} mit Hilfe der folgenden ersten Beziehung bestimmt (172) : @_{BDCi} = E(@_{Di,j}/T_{BD}).T_{b}, wobei
- E() die Funktion ist, die den ganzzahligen Teil der zwischen den Klammern befindlichen Zahl umkehrt, und
- @_{Di,j} die im im Schritt b) erlangten Zeiger enthaltene Adresse ist,
- T_{b} und T_{BD} beide Zweierpotenzen sind,
bei dieser Bestimmung die Division und die Multiplikation der ersten Beziehung von Schieberegistern des Hardware-Sicherungsmoduls ausgeführt werden, dann
- im Schritt c) der die zuzugreifende Codezeile enthaltende Block vom verschlüsselten Speicher ausgehend von der Adresse geladen wird, die durch die eineindeutige Funktion mit der bestimmten Adresse @_{BDCi} verbunden ist.

8. Verfahren nach Anspruch 6, wobei:
- nach dem Schritt b) und vor dem Schritt c) das Hardware-Sicherungsmodul die Adresse @_{BDCi} mit Hilfe der folgenden zweiten Beziehung bestimmt: @_{BDCi}= E(@_{Di,j}/T_{BD}).T_{BD}+E(@_{Di,j}/T_{BD}).(T_{b}-T_{BD}), wobei
- E() die Funktion ist, die den ganzzahligen Teil der zwischen den Klammern befindlichen Zahl umkehrt, und
- @_{Di,j} die im im Schritt b) erlangten Zeiger enthaltene Adresse ist,
- (T_{b}-T_{BD}) und T_{BD} beide Zweierpotenzen sind,
bei dieser Bestimmung jede Division und jede Multiplikation der zweiten Beziehung von Schieberegistern des Hardware-Sicherungsmoduls ausgeführt werden, und
- im Schritt c) der die zuzugreifende Codezeile enthaltende Block vom verschlüsselten Speicher ausgehend von der Adresse geladen wird, die durch die eineindeutige Funktion mit der bestimmten Adresse @_{BDCi} verbunden ist.

9. Verfahren nach einem der vorhergehenden Ansprüche, wobei das Kryptogramm der Gesamtheit der Codezeilen des gespeicherten Blocks von verschlüsselten und authentifizierten Codezeilen (402) :
- nur als Ganzes entschlüsselt werden kann, um den Block von unverschlüsselten Codezeilen und nicht Codezeile für Codezeile zu erlangen, oder
- nur in einer vorbestimmten Reihenfolge entschlüsselt werden kann, um den Block von unverschlüsselten Codezeilen zu erlangen, und keine Entschlüsselung der Codezeilen in einer beliebigen Reihenfolge erlaubt.

10. Computerprogramm, das von einem Mikroprozessor ausgeführt werden kann, indem ein Verfahren gemäß einem der vorhergehenden Ansprüche durchgeführt wird, wobei der Binärcode des Computerprogramms aufweist:
- einen Block von verschlüsselten und authentifizierten Codezeilen, der eine mit Hilfe eines jeweiligen Zeigers zuzugreifende Codezeile enthält, wobei dieser Block von verschlüsselten und authentifizierten Codezeilen enthält:
- ein Kryptogramm (BDᵢ*) der Gesamtheit der Codezeilen dieses Blocks, wobei dieses Kryptogramm als Ganzes entschlüsselt werden muss, um einen Block von unverschlüsselten Codezeilen zu erlangen,
- einen Authentifizierungscode (MACᵢ), der ausgehend vom Block von unverschlüsselten Codezeilen oder ausgehend vom Kryptogramm des Blocks von unverschlüsselten Codezeilen berechnet wird, und
- Metadaten (MDᵢ),
- einen Zeiger, der die Adresse enthält, an der die zuzugreifende Codezeile gespeichert ist,
wobei:
- die Metadaten (MDᵢ) eine erste Zeigerkennung aufweisen, die der zuzugreifenden Codezeile zugeordnet ist, wobei diese erste Zeigerkennung alleine ermöglicht, einen Zeiger eindeutig unter einer mehrere unterschiedliche Zeiger enthaltenden Gesamtheit zu identifizieren, die bei der gleichen Ausführung des Computerprogramms durch den Mikroprozessor eingesetzt werden, und
- der Zeiger enthält:
- einen ersten Bitbereich, der die Adresse der zuzugreifenden Codezeile enthält, und
- einen anderen zweiten Bitbereich, der eine zweite Zeigerkennung enthält, wobei diese zweite Zeigerkennung gleich der ersten Zeigerkennung ist.

11. Hardware-Sicherungsmodul (28) zur Durchführung eines Verfahrens gemäß einem der Ansprüche 1 bis 9, wobei das Hardwaremodul konfiguriert ist, um :
a) das Speichern im verschlüsselten Speicher eines Blocks von verschlüsselten und authentifizierten Codezeilen auszulösen, der eine mit Hilfe eines Zeigers zuzugreifende Codezeile enthält, wobei dieser Block von verschlüsselten und authentifizierten Codezeilen enthält:
- ein Kryptogramm der Gesamtheit der Codezeilen dieses Blocks, wobei dieses Kryptogramm als Ganzes entschlüsselt werden muss, um einen Block von unverschlüsselten Codezeilen zu erlangen,
- einen Authentifizierungscode, der ausgehend vom Block von unverschlüsselten Codezeilen oder ausgehend vom Kryptogramm des Blocks von unverschlüsselten Codezeilen berechnet wird, und
- Metadaten,
b) einen Zeiger zu empfangen, der die Adresse enthält, an der die zuzugreifende Codezeile gespeichert ist, dann
c) das Laden des die zuzugreifende Codezeile enthaltenden Blocks vom verschlüsselten Speicher zum Mikroprozessor auszulösen, und
d) das im geladenen Block enthaltene Kryptogramm zu entschlüsseln, um den Block von unverschlüsselten Codezeilen zu erlangen, und das Speichern des erlangten Blocks von unverschlüsselten Codezeilen im entschlüsselten Speicher und das Speichern der Metadaten des geladenen Blocks auszulösen,
e) mit Hilfe des im geladenen Block enthaltenen Authentifizierungscodes die Integrität zu überprüfen :
- des Blocks von unverschlüsselten Codezeilen, der ausgehend von dem im geladenen Block enthaltenen Kryptogramm erlangt wird, oder
- des im geladenen Block enthaltenen Kryptogramms,
f) wenn diese Überprüfung fehlschlägt, die Verarbeitung, durch den Mikroprozessor, der Codezeilen dieses geladenen Blocks zu verhindern, und, wenn diese Überprüfung gelingt, die Verarbeitung, durch den Mikroprozessor, der Codezeilen dieses geladenen Blocks zu erlauben,
das Sicherungsmodul ebenfalls konfiguriert ist,
- um in die Metadaten des die zuzugreifende Codezeile enthaltenden Blocks eine erste Zeigerkennung einzugliedern, die der zuzugreifenden Codezeile zugeordnet ist, wobei diese erste Zeigerkennung alleine es ermöglicht, einen Zeiger unter einer mehrere unterschiedliche Zeiger enthaltenden Gesamtheit eindeutig zu identifizieren, die bei der gleichen Ausführung des Computerprogramms durch den Mikroprozessor eingesetzt werden,
- als Antwort auf die Ausführung einer Zugriffsanweisung auf die mit Hilfe eines Zeigers zuzugreifende Codezeile eine zweite Zeigerkennung in einem Bitbereich dieses Zeigers zu extrahieren, dann
- um zu überprüfen, dass die zweite Zeigerkennung der ersten Zeigerkennung entspricht, die der zuzugreifenden Codezeile zugeordnet und in den Metadaten des geladenen Blocks enthalten ist, und wenn die ersten und zweiten Zeigerkennungen nicht übereinstimmen, dann die Signalisierung eines Ausführungsfehlers auszulösen, und im gegenteiligen Fall die Auslösung der Signalisierung eines Ausführungsfehlers zu verhindern und dem Mikroprozessor zu erlauben, die zuzugreifende Codezeile zu verarbeiten.

## Claims

1. Method for executing a computer program by means of an electronic apparatus comprising a microprocessor, an unencrypted memory, an encrypted memory and a hardware security module, in which method, during the execution of the computer program, lines of code are transferred between the unencrypted memory and the encrypted memory in whole blocks of a plurality of encrypted and authenticated lines of code, this method comprising the following steps:
a) storing (410) in the encrypted memory a block of encrypted and authenticated lines of code containing a line of code to be accessed using a pointer, this block of encrypted and authenticated lines of code containing:
- a cryptogram of all of the lines of code of this block, this cryptogram having to be decrypted in its entirety to obtain a block of cleartext lines of code,
- an authentication code computed from the block of cleartext lines of codes or from the cryptogram of the block of cleartext lines of code, and
- metadata,
b) obtaining (166), by means of the microprocessor, a pointer containing the address at which the line of code to be accessed is stored, then
c) loading (302) the block containing the line of code to be accessed from the encrypted memory into the microprocessor, and
d) decrypting (306) the cryptogram contained in the loaded block to obtain the block of cleartext lines of code, and storing (308) the obtained block of cleartext lines of code in the unencrypted memory and storing the metadata of the loaded block, and
e) verifying (304), by means of the hardware security module and using the authentication code contained in the loaded block, the integrity:
- of the block of cleartext lines of code obtained from the cryptogram contained in the loaded block, or
- of the cryptogram contained in the loaded block,
f) when this verification fails, inhibiting (310) processing, by the microprocessor, of the lines of code of this loaded block and, when this verification succeeds, permitting processing, by the microprocessor, of the lines of code of this loaded block,
wherein:
- step a) comprises incorporating (408), into the metadata of the block containing the line of code to be accessed, a first pointer identifier associated with the line of code to be accessed, this first pointer identifier alone allowing one pointer to be uniquely identified among a set containing a plurality of different pointers employed in the same execution of the computer program by the microprocessor,
- step b) of obtaining (166) the pointer comprises obtaining a pointer comprising:
- a first range of bits containing the address of the line of code to be accessed, and
- a different second range of bits containing a second pointer identifier, and
- the method comprises a step g) of verifying (176), by means of the hardware security module, that the second pointer identifier contained in the pointer obtained in step b) corresponds to the first pointer identifier associated with the line of code to be accessed and contained in the metadata of the loaded block, and when the first and second pointer identifiers do not correspond, then the security module triggers (180) signalling of an execution fault and, in the contrary case, the security module inhibits (178) triggering of signalling of an execution fault and the microprocessor processes the line of code to be accessed.

2. Method according to Claim 1, wherein step d) comprises storing (308) the first pointer identifier contained in the metadata of the loaded block in a memory solely accessible by the hardware security module.

3. Method according to either one of the preceding claims, wherein, before step a), the authentication code of the block of encrypted and authenticated lines of code to be stored is also computed (408) from the metadata.

4. Method according to any one of the preceding claims, wherein, before step a), the method comprises:
- encrypting (406) the block of cleartext lines of code using an initialization vector and generating (404) a new initialization vector before each encryption of the block of cleartext lines of code, and
- incorporating (408), into the metadata of the block of encrypted and authenticated lines of code, the initialization vector used to obtain the cryptogram of this block of encrypted and authenticated lines of code, and
- during the decryption (306) of the cryptogram, the hardware security module extracts, from the metadata of the block of encrypted and authenticated lines of code, the initialization vector to be used to carry out this decryption.

5. Method according to Claim 4, wherein:
- during the encryption of the block of cleartext lines of code, the cleartext lines of code are encrypted using a stream cipher initialized using the initialization vector, and
- the initialization vector is stored in the block of encrypted and authenticated lines of code before the cryptogram of all of the lines of code of this block, then
- during the decryption of the cryptogram, the hardware security module first extracts the initialization vector to be used to carry out this decryption then immediately starts decrypting the first line of code of the cryptogram, this line of code being received before the complete cryptogram is received.

6. Method according to any one of the preceding claims, wherein, in step a), the address at which the block of encrypted and authenticated lines of code is stored is related, by a bijective function, to an address @_{BDCi} defined by the following relationship: @_{BDCi} = @_{BDi}.T_{b}/T_{BD}, where:
- @_{BDi} is the address at which starts, in the address space of the computer program, the block of cleartext lines of code,
- T_{b} is the size, in number of bytes, of the block of encrypted and authenticated lines of code,
- T_{BD} is the size, in number of bytes, of the block of cleartext lines of code.

7. Method according to Claim 6, wherein:
- after step b) and before step c), the hardware security module determines (172) the address @_{BDCi} using the following first relationship: @_{BDCi} = E(@_{Di,j}/T_{BD}).T_{b}, where
- E() is the function that returns the integer part of the number located between the parentheses, and
- @_{Di,j} is the address contained in the pointer obtained in step b),
- T_{b} and T_{BD} are both powers of two,
the division and multiplication of the first relationship being executed by shift registers of the hardware security module during this determining operation, then
- in step c), the block containing the line of code to be accessed is loaded, from the encrypted memory, from the address related, by the bijective function, to the determined address @_{BDCi}.

8. Method according to Claim 6, wherein:
- after step b) and before step c), the hardware security module determines the address @_{BDCi} using the following second relationship: @_{BDCi} = E(@_{Di,j}/T_{BD}).T_{BD} + E(@_{Di,j}/T_{BD}).(T_{b}-T_{BD}), where
- E() is the function that returns the integer part of the number located between the parentheses, and
- @_{Di,j} is the address contained in the pointer obtained in step b),
- (T_{b}-T_{BD}) and T_{BD} are both powers of two,
each division and each multiplication of the second relationship being executed by shift registers of the hardware security module during this determining operation, and
- in step c), the block containing the line of code to be accessed is loaded, from the encrypted memory, from the address related, by the bijective function, to the determined address @_{BDCi}.

9. Method according to any one of the preceding claims, wherein the cryptogram of all of the lines of code of the stored block of encrypted and authenticated lines of code (402):
- may solely be decrypted in its entirety to obtain the block of cleartext lines of code, and not line of code by line of code, or
- may solely be decrypted in a predetermined order to obtain the block of cleartext lines of code, and does not permit the lines of code to be decrypted in any order.

10. Computer program able to be executed by a microprocessor by implementing a method according to any one of the preceding claims, wherein the binary code of the computer program comprises:
- a block of encrypted and authenticated lines of code containing a line of code to be accessed using a respective pointer, this block of encrypted and authenticated lines of code containing:
- a cryptogram (BDᵢ^{*}) of all of the lines of code of this block, this cryptogram having to be decrypted in its entirety to obtain a block of cleartext lines of code,
- an authentication code (MACᵢ) computed from the block of cleartext lines of codes or from the cryptogram of the block of cleartext lines of code, and
- metadata (MDᵢ),
- a pointer containing the address at which the line of code to be accessed is stored wherein:
- the metadata (MDᵢ) comprise a first pointer identifier associated with the line of code to be accessed, this first pointer identifier alone allowing one pointer to be uniquely identified among a set containing a plurality of different pointers employed in the same execution of the computer program by the microprocessor, and
- the pointer comprises:
- a first range of bits containing the address of the line of code to be accessed, and
- a different second range of bits containing a second pointer identifier, this second pointer identifier being equal to the first pointer identifier.

11. Hardware security module (28) for implementing a method according to any one of Claims 1 to 9, wherein the hardware module is configured to:
a) trigger storage in the encrypted memory of a block of encrypted and authenticated lines of code containing a line of code to be accessed using a pointer, this block of encrypted and authenticated lines of code containing:
- a cryptogram of all of the lines of code of this block, this cryptogram having to be decrypted in its entirety to obtain a block of cleartext lines of code,
- an authentication code computed from the block of cleartext lines of codes or from the cryptogram of the block of cleartext lines of code, and
- metadata,
b) receive a pointer containing the address at which the line of code to be accessed is stored, then
c) trigger loading of the block containing the line of code to be accessed from the encrypted memory into the microprocessor, and
d) decrypt the cryptogram contained in the loaded block to obtain the block of cleartext lines of code, and trigger storage of the obtained block of cleartext lines of code in the unencrypted memory and storage of the metadata of the loaded block,
e) verify, using the authentication code contained in the loaded block, the integrity:
- of the block of cleartext lines of code obtained from the cryptogram contained in the loaded block, or
- of the cryptogram contained in the loaded block,
f) when this verification fails, inhibiting processing, by the microprocessor, of the lines of code of this loaded block and, when this verification succeeds, permitting processing, by the microprocessor, of the lines of code of this loaded block,
the security module also being configured:
- to incorporate, into the metadata of the block containing the line of code to be accessed, a first pointer identifier associated with the line of code to be accessed, this first pointer identifier alone allowing one pointer to be uniquely identified among a set containing a plurality of different pointers employed in the same execution of the computer program by the microprocessor,
- in response to the execution of an instruction to access the line of code to be accessed using a pointer, to extract a second pointer identifier from a range of bits of this pointer, then
- to verify that the second pointer identifier corresponds to the first pointer identifier associated with the line of code to be accessed and contained in the metadata of the loaded block, and if the first and second pointer identifiers do not correspond, then to trigger signalling of an execution fault and, in the contrary case, to inhibit triggering of signalling of an execution fault and to permit the microprocessor to process the line of code to be accessed.
